(19)

Europäisches
Patentamt
European
Patent Office
Office européen
des brevets

(11) **EP 2 280 336 A2**

(12) # EUROPEAN PATENT APPLICATION

(43) Date of publication:
**02.02.2011 Bulletin 2011/05**

(51) Int Cl.:
**G06F 3/042** (2006.01)

(21) Application number: **10171219.8**

(22) Date of filing: **29.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **31.07.2009 JP 2009178778**
**19.03.2010 JP 2010063898**

(71) Applicant: **Seiko Epson Corporation
Shinjuku-ku
Tokyo (JP)**

(72) Inventor: **Onishi, Yasunori
Nagano 392-8502 (JP)**

(74) Representative: **HOFFMANN EITLE
Patent- und Rechtsanwälte
Arabellastraße 4
81925 München (DE)**

(54) **Optical position detection apparatus and display apparatus having position detection function**

(57)    An optical position detection apparatus for optically detecting a position of a target object in a detection area, includes: position detection light sources that emit position detection lights irradiated onto the target object; a light guide plate having light incident portions that receive the position detection lights therein and emitting the received position detection lights from the light incident portions onto the detection area to form an intensity distribution of a light emission quantity of the position detection lights in the detection area; a light detector having light receiving portions arranged toward the detection area to receive the position detection lights that are reflected by the target object; and a signal processing portion that detects the position of the target object based on the intensity distribution of the light emission quantity; wherein the light guide plate has a plane shape formed in long-side and short-side directions; the light incident portions and the position detection light sources are installed on corner portions of the light guide plate; and the light incident portions have concavo-convex shapes formed thereon and provided with deflection incident surfaces for deflecting a portion of the position detection lights incident to the optical incident portions in a direction that follows long-side portions of the light guide plate through refraction.

FIG. 1A

EP 2 280 336 A2

**Description**

BACKGROUND

1. Technical Field

The present invention relates to an optical position detection apparatus and a display apparatus having a position detection function that is provided with the optical position detection apparatus.

2. Related Art

In an electronic appliance such as a portable phone, car navigation, personal computer, ticket machine, bank terminal, or the like, a display apparatus having a position detection function, in which a touch panel is arranged on the front surface of an image generation apparatus such as a liquid crystal apparatus, has been used recently. In the display apparatus having the position detection function as described above, an input of information is performed while an image displayed on the image generation apparatus is referred to. The touch panel as described above is composed of a position detection apparatus for detecting the position of a target object in a detection area.

As detection types of the position detection apparatus, a resistive type, an ultrasonic type, a capacitive type, an optical type, and the like, are known. The resistive type is low-cost, but, like the capacitive type, has a low transmissivity. The ultrasonic type or the capacitive type has a high response speed, but has a low environmental resistance. By contrast, the optical type has the characteristics of high environmental resistance, high transmissivity, and high response speed (see JP-A-2004-295644 and JP-A-2004-303172).

However, position detection apparatuses as described in JP-A-2004-295644 and JP-A-2004-303172 require light sources or light detectors in the neighborhood of a display screen, the number of which corresponds to the resolution of position coordinates that should be detected, and thus are high-cost.

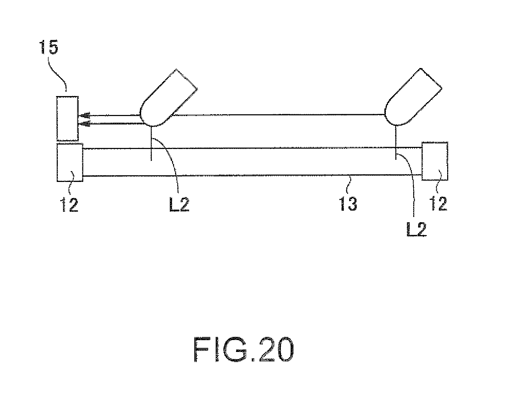

Accordingly, as schematically illustrated in Fig. 20, the inventor of the invention is examining an optical position detection apparatus in which position detection light sources 12 are installed at end portions of a light guide plate 13 to face each other, and a light detector 15 detects a position detection light L2 that is emitted from the light guide plate 13 and reflected by a user's finger and so on. The optical position detection apparatus as described above can detect the position of the finger and so on based on the relationship between the intensity of the position detection light L2 that is emitted from the light guide plate 13 and the distance from the position detection light source 12, and thus it has the advantage that a small number of position detection light sources 12 or light detectors 15 is required.

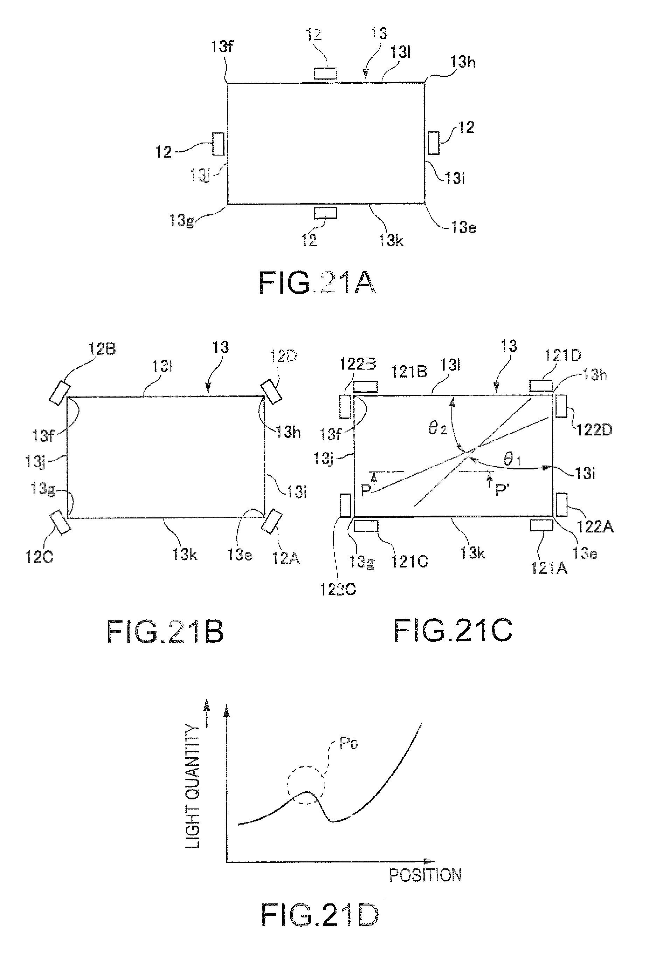

In the optical position detection apparatus as described above, as illustrated in Fig. 21A, if the position detection light sources 12 are installed in center positions of long-side portions 13k and 131 and center positions of short-side portions 13i and 13j of the rectangular light guide plate 13, respectively, the intensity of the position detection light emitted from the light guide plate 13 deteriorates in the neighborhood of corner portions 13e, 13f, 13g, and 13h of the light guide plate 13.

Accordingly, as illustrated in Fig. 21B, the inventor of the invention proposes to arrange position detection light sources 12A, 12B, 12C, and 12D on the corner portions 13e, 13f, 13g, and 13h of the light guide plate 13, respectively. In such a configuration, in the case of performing the position detection in the direction of the long side of the light guide plate 13, the simultaneous light-up of the position detection light sources 12A and 12D and the simultaneous light-up of the position detection light sources 12B and 12C are performed with somewhat of a time shift, while in the case of performing the position detection in the direction of the short side of the light guide plate 13, the simultaneous light-up of the position detection light sources 12A and 12C and the simultaneous light-up of the position detection light sources 12B and 12D are performed with somewhat of a time shift.

Also, as illustrated in Fig. 21C, the inventor of the invention proposes to install first light emitting devices 121A, 121B, 121C, and 121D (first position detection light sources) on the long side portions of the corner portions 13e, 13f, 13g, and 13h of the light guide plate 13 and to install second light emitting devices 122A, 122B, 122C, and 122D (second position detection light sources) on the short side portions of the corner portions 13e, 13f, 13g, and 13h of the light guide plate 13. In such a configuration, in the case of performing the position detection in the direction of the long side of the light guide plate 13, the simultaneous light-up, of the first light emitting devices 121A and 121D and the second light emitting devices 122A and 122D and the simultaneous light-up of the first light emitting devices 121B and 121C and the second light emitting devices 122B and 122C are performed with somewhat of a time shift. Also, in the case of performing the position detection in the direction of the short side of the light guide plate 13, the simultaneous light-up of the first light emitting devices 121A and 121C and the second light emitting devices 122A and 122C and the simultaneous light-up of the first light emitting devices 121B and 121D and the second light emitting devices 122B and 122D are performed with somewhat of a time shift.

According to the above-described configuration, the intensity of the position detection light that is emitted from the light guide plate 13 is high even in the neighborhood of the corner portions 13e, 13f, 13g, and 13h of the light guide plate 13.

However, in the configuration as illustrated in Fig. 21C, for example, if it is assumed that a range in which the position detection light emitted from the first light emitting device 121D travels within the light guide plate 13 is indicated by $\theta1$, and a range in which the position detection light emitted from the second light emitting device 122D travels within the light guide plate 13 is indicated by $\theta2$, the region which the position detection light does not reach occurs within the light guide plate 13. As a result, even if the first light emitting devices 121A and 121D and the second light emitting devices 122A and 122D simultaneously light up when the position detection is performed in the long-side direction of the light guide plate 13, an unnatural inflection point P0 occurs on the intensity distribution of the position detection light that is emitted from the light guide plate 13 in a position indicated by line P-P' of Fig. 21C, and thus a reversal point occurs between the intensity of the position detection light and the distance from the light source. Such a problem also occurs in the same manner even in the configuration as illustrated in Fig. 21B. In this case, the installation shapes as illustrated in Figs. 20 and 21A to 21C refer to reference examples of the invention, but do not refer to the related art.

SUMMARY

An advantage of some aspects of the invention is to provide an optical position detection apparatus and a display apparatus having a position detection function that is provided with the optical position detection apparatus, which can heighten position detection accuracy by optimizing the intensity distribution of a position detection light that is emitted from a light guide plate.

According to an aspect of the invention, there is provided an optical position detection apparatus for optically detecting the position of a target object in a detection area, which includes position detection light sources that emit position detection lights irradiated onto the target object; a light guide plate having light incident portions that receive the position detection lights therein and emitting the position detection lights onto the detection area to form an intensity distribution of a light emission quantity of the position detection lights in the detection area; a light detector having light receiving portions arranged toward the detection area to receive the position detection lights that are reflected by the target object; and a signal processing portion that detects the position of the target object based on the intensity distribution of the light emission quantity; wherein the light guide plate has a plane shape in long-side and short-side directions, the light incident portions and the position detection light sources are installed on corner portions of the corresponding light guide plate, and the light incident portions have concavo-convex shapes formed thereon and provided with deflection incident surfaces for deflecting a portion of the position detection lights incident to the optical incident portions in a direction that follows long-side portions of the light guide plate through refraction.

The terms "concavo-convex", "convex portion", and "concave portion" mean prominence and depression based on a predetermined reference line. However, in aspects and embodiments of the invention, the terms "concavo-convex", "convex portion", and "concave portion" of the light incident portion may mean a shape in which one of two neighboring points is relatively prominent to the other thereof, and as a result, the other point is relatively depressed from the one point.

According to the aspect of the invention, if the position detection light that is emitted from a light emission surface of the light guide plate is reflected by a target object that is arranged on the emission side of the light guide plate, the reflected light is detected by the light detector. Here, if there is a predetermined correlation between the intensity of the position detection light in the detection area and a distance from the position detection light source, the position of the target object can be detected from a light receiving intensity that is obtained through the light detector. Accordingly, it is not necessary to arrange a plurality of optical devices along the detection region, and thus the position detection apparatus with low cost and with low power consumption can be configured. Here, in the aspect of the invention, the light guide plate has a plane shape in the long-side and short-side directions, and the light incident portions and the position detection light sources are installed on corner portions of the corresponding light guide plate. Accordingly, even in the neighborhood of the corner portions of the light guide plate, the intensity of the position detection light that is emitted from the light guide plate is high. Also, since the light incident portions have concavo-convex shapes formed thereon and provided with deflection incident surfaces for deflecting a portion of the position detection light incident to the optical incident portions in a direction that follows long-side portions of the light guide plate through refraction, the light quantity of the position detection light that travels in the direction following the long-side portions of the light guide plate can be heightened. Accordingly, when the position detection in the long-side direction of the light guide plate is performed, the light emission quantity of the position detection light in the detection area has an appropriate intensity distribution, and thus position detection accuracy can be heightened.

In the aspect of the invention, one light incident portion and one position detection light source may be installed on each corner portion of the light guide plate, and when the light guide plate is seen in a plan view, the light guide plate may adopt a configuration in which the concavo-convex shape is provided in a portion where the corner portions of the light guide plate are obliquely cut out with respect to the long-side portions and the short-side portions of the corresponding light guide plate. By the above-described configuration, the position detection lights emitted from the position detection light sources include lights which are headed in a direction that follows the long-side portion, in a diagonal direction of the light guide plate, and in a direction that follows the short-side portion, respectively. However, a portion of the light that is headed in the diagonal direction of the light guide plate is deflected in a traveling direction that follows the long-side portion. Accordingly, in the case of performing the position detection in the long-side direction of the light guide plate, the light emission quantity of the position detection lights in the detection area has an appropriate intensity distribution, and thus position detection accuracy can be heightened.

In the aspect of the invention, the concavo-convex shape may adopt a configuration which is formed by a prism type convex portion toward a peak, on the position detection light source. In this case, it is preferable that the angle of the peak is 50° to 80°, If the angle of the peak exceeds 80°, the light may be excessively deflected in a direction that follows the side of the light guide plate, whereas if the angle of the peak is smaller than 50°, the light may not be sufficiently deflected in a direction that follows the long-side portion of the light guide plate. Accordingly, it is preferable that the angle of the peak is equal to or greater than 50° and is equal to or less than 80°.

In the aspect of the invention, the light incident portion may include a first light incident portion installed on a long-side portion of the light guide plate and a second light incident portion installed on a short-side portion of the light guide plate, which are on the corner portions of the light guide plate. The position detection light source, which is provided on the corner portion of the light guide plate, may include a first light emitting device that emits the position detection light toward the first light incident portion, and a second light emitting device that emits the position detection light toward the second light incident portion. The concavo-convex shape may adopt a configuration that is formed on the first light incident portion.

In this case, it is preferable that the concavo-convex shape is formed by the prism type convex portion, which is toward the peak, on the first light emitting device. By this configuration, the position detection light that is emitted from the second light emitting device is headed in a direction that follows the long-side portion. Also, the position detection light that is emitted from the first light emitting device is headed in a direction that follows the short-side portion, but a portion thereof is deflected in a traveling direction that follows the long-side portion. Accordingly, in the case of performing the position detection in the long-side direction of the light guide plate, the light emission quantity of the position detection lights in the detection area has an appropriate intensity distribution, and thus position detection accuracy can be heightened. In the case of adopting the configuration as described above, it is preferable that the angle of the peak is 50° to 80°. If the angle of the peak exceeds 80°, the deflection in the direction that follows the long-side portion of the light guide plate may not be sufficient, whereas if the angle of the peak is smaller than 50°, the deflection may be excessively performed in the direction that follows the long-side portion of the light guide plate. Accordingly, it is preferable that the angle of the peak is equal to or greater than 50° and is equal to or less than 80°.

The optical position detection apparatus to which the invention is applied may be used to configure a display apparatus having a position detection function. In this case, the display apparatus having the position detection function has an image generation apparatus that forms an image in an overlapping area when the light guide plate is seen in a plan view. Examples of the image generation apparatus may be a projection display apparatus or a direct-view display apparatus, such as a liquid crystal apparatus, an organic electroluminescence apparatus, or the like.

The display apparatus having the position detection function according to the aspect of the invention may be used in an electronic appliance, such as a portable phone, car navigation, personal computer, ticket machine, bank terminal, or the like, in addition to various kinds of display apparatuses.

Also, according to another aspect of the invention, there is provided an optical position detection apparatus for optically detecting the position of a target object, which includes a light guide plate having light incident portions provided on four corner portions of a circumferential portion; four position detection light sources that emit position detection lights toward the light incident portions; a light detector that receives the position detection lights which are emitted from one surface in the thickness direction of the light guide plate and are reflected by the target obj ect; and a signal processing portion that detects the position of the target object based on the result of light received in the light detector; wherein the four position detection light sources emit the position detection lights through alternate light-up by changing a combination of one portion of the position detection light sources and the other portion of the position detection light sources the number of which is equal to that of the one portion of the position detection light sources; and the optical incident portion is provided with at least either of a plurality of convex portions and a plurality of concave portions.

According to the aspect of the invention, if the position detection light that is emitted from the light emission surface of the light guide plate is reflected by a target object that is arranged on the emission side of the light guide plate, the reflected light is detected by the light detector. Here, if there is a predetermined correlation between the intensity of the position detection light in the detection area and the distance from the position detection light source, a position of the target object can be detected from a light receiving intensity that is obtained through the light detector. Accordingly, it is not necessary to arrange a plurality of optical devices along the detection region, and thus the position detection apparatus with low cost and with low power consumption can be configured. Here, in the aspect of the invention, since the light incident portions are installed on the corner portions of the light guide plate, and a plurality of convex portions or a plurality of concave portions are installed in the light incident portions, the position detection lights are deflected when they are incident to the light guide plate, and the position detection lights appropriately travel within the light guide plate. Accordingly, the light emission quantity of the position detection light to the light guide plate has an appropriate intensity distribution, and thus position detection accuracy can be heightened.

In the aspect of the invention, the light incident portion may adopt a configuration in which a prism type convex portion is formed as the convex portion.

In the aspect of the invention, the light incident portion may adopt a configuration in which a convex portion in the form of a tetragon is formed as the convex portion.

In the aspect of the invention, the light incident portion may adopt a configuration in which a convex portion in the form of a tetragon is formed as the convex portion, and a prism type convex portion is formed on at least either of a tip end portion of the corresponding convex portion or a bottom portion of the concave portion that is inserted between the corresponding convex portions.

In the aspect of the invention, the light incident portion may adopt a configuration in which a curved convex portion as the convex portion and a curved concave portion as the concave portion are connected together.

In the aspect of the invention, the light incident portion may adopt a configuration in which a convex curved surface is formed as the convex portion.

In the aspect of the invention, the light incident portion may adopt a configuration in which a concave curved surface is formed as the concave portion.

In the aspect of the invention, the light incident portion may adopt a configuration in which a concavo-convex having a cross-sectional shape of a Fresnel lens is formed by the convex portion and the concave portion.

In the aspect of the invention, it is preferable that the position detection light is composed of infrared rays. In this case, the position detection light is not visually recognized.

The optical position detection apparatus according to the aspects of the invention can be used in a projection display apparatus having a position detection function. In this case, the light guide plate adopts a configuration in which one surface thereof crosses a direction in which the image is projected. Also, the projection display apparatus having the position detection function has the optical position detection apparatus according to the aspect of the invention and an image projection apparatus that projects the image.

BRIEF DESCRIPTION OF THE DRAWINGS

The invention will be described with reference to the accompanying drawings, wherein like numbers reference like elements.

Figs. 1A and 1B are explanatory views schematically illustrating a configuration of an optical position detection apparatus to which the invention is applied and a display apparatus having a position detection function that is provided with the optical position detection apparatus.

Figs. 2A to 2C are explanatory views illustrating a detailed configuration of the optical position detection apparatus to which the invention is applied.

Figs. 3A and 3B are explanatory views illustrating the contents of signal processing in the optical position detection apparatus to which the invention is applied and the display apparatus having the position detection function.

Figs. 4A and 4B are explanatory views illustrating light-up patterns of position detection light sources during the position detection in the optical position detection apparatus to which the invention is applied and the display apparatus having the position detection function.

Figs. 5A to 5C are explanatory views illustrating a light guide plate that is used in the optical position detection apparatus to which the invention is applied and the display apparatus having the position detection function.

Figs. 6A to 6C are explanatory views illustrating another light guide plate that is used in the optical position detection apparatus to which the invention is applied and the display apparatus having the position detection function.

Fig. 7 is an explanatory view illustrating a first modification of the concavo-convex formed on the light guide plate of the optical position detection apparatus to which the invention is applied.

Figs. 8A and 8B are explanatory views illustrating a second modification of the concavo-convex formed on the light guide plate of the optical position detection apparatus to which the invention is applied.

Figs. 9A and 9B are explanatory views illustrating a third modification of the concavo-convex formed on the light guide plate of the optical position detection apparatus to which the invention is applied.

Fig. 10 is an explanatory view illustrating a fourth modification of the concavo-convex formed on the light guide plate of the optical position detection apparatus to which the invention is applied.

Fig. 11 is an explanatory view illustrating a fifth modification of the concavo-convex formed on the light guide plate of the optical position detection apparatus to which the invention is applied.

Fig. 12 is an explanatory view illustrating a sixth modification of the concavo-convex formed on the light guide plate of the optical position detection apparatus to which the invention is applied.

Fig. 13 is an explanatory view illustrating a seventh modification of the concavo-convex formed on the light guide plate of the optical position detection apparatus to which the invention is applied.

Fig. 14 is an explanatory view illustrating a eighth modification of the concavo-convex formed on the light guide plate of the optical position detection apparatus to which the invention is applied.

Fig. 15 is an exploded perspective view of an optical position detection apparatus according to a first modification of the invention.

Fig. 16 is an explanatory view illustrating a cross-sectional configuration of an optical position detection apparatus according to a first modification of the invention.

Fig. 17 is an exploded perspective view of an optical position detection apparatus according to a second modification of the invention.

Fig. 18 is an explanatory view illustrating a cross-sectional configuration of an optical position detection apparatus according to a second modification of the invention.

Figs. 19A to 19C are explanatory views illustrating an electronic appliance using a display apparatus having position detection function according to an embodiment of the invention.

Fig. 20 is an explanatory view illustrating a basic configuration of an optical position detection apparatus.

Figs. 21A to 21D are explanatory views illustrating an optical position detection apparatus according to a reference example of the invention.

## DESCRIPTION OF EXEMPLARY EMBODIMENTS

Hereinafter, embodiments of the invention will be described in detail with reference to the accompanying drawing.

Configuration of Optical Position Detection Apparatus and Display Apparatus having Position Detection Function

The Whole Configuration of Display Apparatus having Position Detection Function

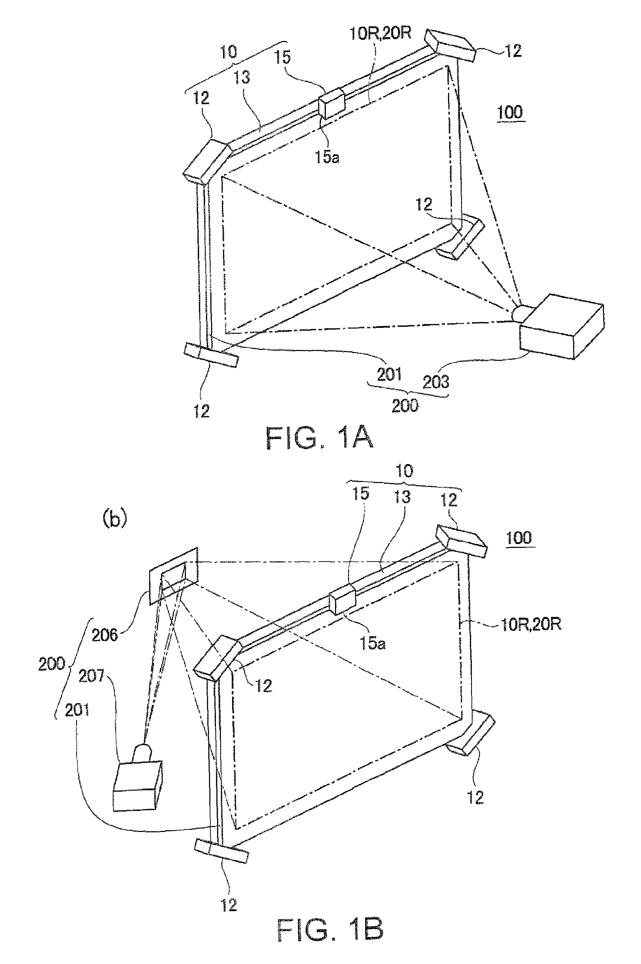

Figs. 1A and 1B are explanatory views schematically illustrating a configuration of an optical position detection apparatus to which the invention is applied and a display apparatus having a position detection function that is provided with the optical position detection apparatus. Specifically, Figs. 1A and 1B are an explanatory view illustrating a configuration example in the case of using a projection display apparatus that projects an image from the front (input manipulation side) with respect to an image projection surface, and an explanatory view illustrating a configuration example in the case of using a projection display apparatus that projects an image from the rear (opposite side to the input manipulation side) with respect to the image projection surface.

A display apparatus 100 having a position detection function as illustrated in Figs. 1A and 1B is provided with an optical position detection apparatus 10 and an image generation apparatus 200. When a target obj ect such as a finger approaches a detection area 10R, the optical position detection apparatus 10 detects the plane position of the target object Ob based on an image that is displayed by the image generation apparatus 200.

Specifically, as described later, the optical position detection apparatus 10 is provided with position detection light sources 12 that emit the position detection light, a rectangular light guide plate 13 that is relatively long in width, and a light detector 15 having a light receiving portion 15a that faces on the detection area 10R.

In this embodiment of the invention, the image generation apparatus 200 is of a projection type, and has a screen-shaped projected surface 201 that is arranged to overlap the front surface side (input manipulation side) of the light guide plate 13. Also, the front surface (one surface in the thickness direction) of the light guide plate 13 and the projected surface 201 cross the projection direction of an image from the image generation apparatus 200. Due to this, the image generation apparatus 200 forms an image in an overlapping area when the light guide plate 13 is seen in a plan view. In this embodiment of the invention, an image forming area 20R is an area that substantially overlaps the detection area 10R of the optical position detection apparatus 10, and is in the form of a rectangle that is relatively long in width. Here, the projected surface 201 is made of a material that can transmit infrared rays such as white light and so on.

In the display apparatus 100 having the position detection function as illustrated in Figs. 1A and 1B, the image generation apparatus 200 of the display apparatus 100 having the position detection function as illustrated in Fig. 1A is provided with a projection display apparatus 203 that projects an image from the front (input manipulation side). The image generation apparatus 200 of the display apparatus 100 having the position detection function as illustrated in Fig. 1B is provided with a mirror 206 arranged in the rear (the opposite side to the input manipulation side) of the light guide plate 13 and the projected surface 201, and a projection display apparatus 207 that projects an image toward the mirror 206.

Detailed Configuration of an Optical Position Detection Apparatus 10

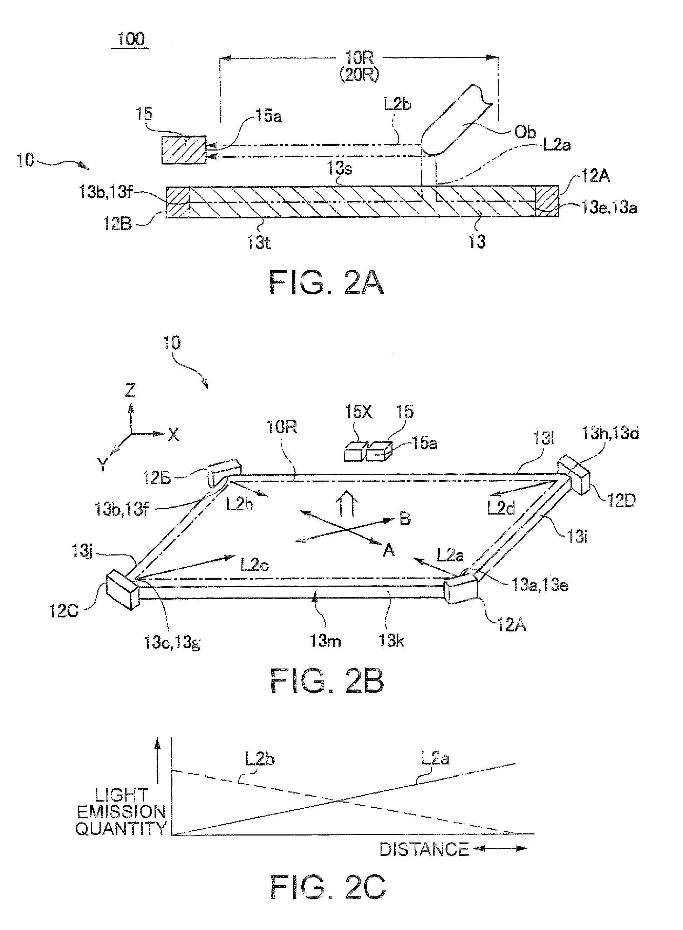

Figs. 2A to 2C are explanatory views illustrating a detailed configuration of the optical position detection apparatus to which the invention is applied. Specifically, Figs. 2A, 2B, and 2C are an explanatory view schematically illustrating a cross-sectional configuration of the optical position detection apparatus, an explanatory view illustrating a configuration of a light guide plate and so on that is used in the optical position detection apparatus, and an explanatory view illustrating an attenuation state of the position detection infrared rays in the light guide plate.

As illustrated in Figs. 2A and 2B, in the optical position detection apparatus 10 according to this embodiment of the invention, the light guide plate 13 is substantially in the form of a rectangular plane. As side cross-sections 13m of the light guide plate 13, long-side portions 13k and 13l face each other, and short-side portions 13i and 13j face each other. In correspondence to the shape of the light guide plate 13 as describe above, the optical position detection apparatus 10 has four position detection light sources 12A to 12D (the position detection light sources 12 as illustrated in Figs. 1A and 1B) that emit position detection lights L2a to L2d, and the light guide plate 13 is provided with four light incident portions 13a to 13d to which the position detection lights L2a to L2d are incident on the side cross-sections 13m. The light guide plate 13 is provided with a light emission surface 13s provided on one surface (upper surface as illustrated) to emit the position detection lights L2a to L2d having propagated through the inside of the light guide plate 13, and the light emission surface 13s and the side cross-section 13m are orthogonal to each other. That is, when the light guide plate 13 is seen in a plan view, one surface of the light guide plate 13 in the thickness direction becomes the light emission surface 13s, and a circumferential portion thereof in the thickness direction becomes the side cross-section 13m that is orthogonal to the light emission surface 13s. Also, the optical position detection apparatus 10 is provided with the light detector 15 having the light receiving portion 15a that faces on the detection area 10R.

In this embodiment of the invention, the four position detection light sources 12A to 12D and the four light incident portions 13a to 13d are all installed in corner portions 13e, 13f, 13g, and 13h of the light guide plate 13. The position detection light sources 12A to 12D are arranged to face the light incident portions 13a to 13d, and preferably, are arranged to close-contact to the light incident portions 13a to 13d. In this embodiment of the invention, a compensation light detector 15x is used in addition to the light detector 15. The compensation light detector 15x is to compensate for the influence of a temperature or the like upon the result of detection that is obtained through the light detector 15 rather than to detect the position detection lights L2a to L2d.

The light guide plate 13 is formed of a transparent resin plate such as polycarbonate or acrylic resin. On the light emission surface 13s of the light guide plate 13 or the rear surface 13t that is opposite to the light emission surface 13s, a surface concavo-convex structure, a prism structure, a scattering layer (not illustrated), and the like, are installed. By such a light scattering structure, the lights, which are incident to the light incident portions 13a to 13d and propagate through the inside of the light guide plate, are gradually deflected as they travel in their propagation directions, and then are emitted from the light emission surface 13s. In this case, on the light emission side of the light guide plate 13, optical sheets such as a prism sheet, a light scattering plate, and the like, may be arranged to seek the uniformity of the position detection lights L2a to L2d, if necessary.

The position detection light sources 12A to 12D are composed of light emitting devices, for example, such as LEDs (Light Emitting Diodes), and emit the position detection lights L2a to L2d composed of infrared rays as emitted lights in accordance with drive signals output from a driving circuit (not illustrated). The kinds of the position detection lights L2a to L2d are not specially limited, but it is sufficient if they have wavelength distribution different from that of a visible light, or they have different light emitting features through addition of modulation such as flickering thereto. Also, it is preferable that the position detection lights L2a to L2d have a wavelength area which can be efficiently reflected by a target object Ob such as a finger or a touch pen. Accordingly, if the target object Ob is a human body such as a finger and so on, it is preferable that the position detection lights may be infrared rays (especially, near infrared rays that is near to the visible light region, for example, having a wavelength in the neighborhood of 850nm) having a high reflection rate on the surface of the human body or may have the wavelength of 950nm. Also, if the position detection light L2 is the infrared rays, it has the advantage that the position detection light L2 is not visually recognized.

Basically, a plurality of position detection light sources 12A to 12D is installed, and emits the position detection lights L2a to L2d in different positions, respectively. Among the four position detection light sources 12A to 12D, the position detection light sources in diagonal positions form a pair to constitute a first light source, and other two position detection light sources form a pair to constitute a second light source. Also, among the four position detection light sources 12A to 12D, two neighboring position detection light sources may form a pair to constitute a first light source pair, and other two position detection light sources may form a pair to constitute a second light source pair.

In the display apparatus 100 having the position detection function as configured above, the position detection light L2a and the position detection light L2b propagate in opposite directions as indicated by arrows A within the light guide plate 13, and are emitted from the light emission surface 13s. Also, the position detection light L2c and the position detection light L2d propagate in opposite directions that cross to the directions as indicated by the arrows A (directions indicated by arrows B), respectively, and are emitted from the light emission surface 13s.

The detection area 10R is a plane range in which the position detection lights L2a to L2d are emitted to the visually recognizable side (manipulation side) and in which reflected lights due to the target object Ob may occur. In this embodiment of the invention, the plane shape of the detection area 10R is a tetragon, and the light detector 15 is arranged roughly in the center portion in the length direction of one long-side portion among four side portions of the detection area. That is, the light detector 15 is arranged in an overlapping position in the thickness direction of the light guide plate 13 with respect to the side portion 131 that is inserted between the neighboring corner portions (optical incident portions 13b and 13d) in the light guide plate 13. In the detection area 10R, the inside angle of the corner portions of the neighboring sides is set to 90 degrees, and this inside angle is equal to the inside angle of the corner portions 13e to 13h of the light guide plate 13.

Basic Principle

A method of acquiring position information of the target object Ob based on the detection of the light detector 15 will be described. Various position information acquisition methods may be considered, and as one example of such methods, for example, a method of obtaining position coordinates in a direction in which two corresponding light sources are connected may be performed by obtaining the ratio of attenuation coefficients of two position detection lights based on the ratio of the detected light quantities of the position detection lights and obtaining propagation distances of both the position detection lights from the ratio of the attenuation coefficients.

First, in a display apparatus 100 having a position detection function according to an embodiment of the invention, position detection lights L2a to L2d emitted from the position detection light sources 12A to 12D are incident from light incident portions 13a to 13d to the inside of a light guide plate 13, travel within the light guide plate 13, and are gradually emitted from a light emission surface 13s. As a result, the position detection lights L2a to L2d are emitted in the form of a surface from the light emission surface 13s.

For example, the position detection light L2a from the light incident portion 13a travels within the light guide plate 13 toward the light incident portion 13b, and is gradually emitted from the light emission surface 13s. In the same manner, the position detection lights L2c and L2d travel within the light guide plate 13, and are gradually emitted from the light emission surface 13s. Accordingly, if a target object Ob such as a finger is arranged in the detection area 10R, the position detection lights L2a to L2d are reflected by the target object Ob, and a portion of the reflected light is detected by the light detector 15.

Here, the light quantity of the position detection light L2a that is emitted onto the detection area 10R is linearly attenuated according to the distance from the position detection light source 12A as indicated as a solid line in Fig. 2C, and the light quantity of the position detection light L2b that is emitted onto the detection area 10R is linearly attenuated according to the distance from the position detection light source 12B as indicated as a dotted line in Fig. 2C.

Also, if it is assumed that the control amount (e.g. current amount), conversion coefficient, and light emission quantity of the position detection light source 12A are Ia, k, and Ea, and the control amount (e.g. current amount), conversion coefficient, and light emission quantity of the position detection light source 12B are Ib, k, and Eb, the following is realized.

$$Ea = k \cdot Ia$$

$$Eb = k \cdot Ib$$

Also, if it is assumed that the attenuation coefficient and detected light quantity of the position detection light L2a are fa and Ga, and the attenuation coefficient and detected light quantity of the position detection light L2b are fb and Gb, the following is realized.

$$Ga = fa \cdot Ea = fa \cdot k \cdot Ia$$

$$Gb = fb \cdot Eb = fb \cdot k \cdot Ib$$

Accordingly, if it is assumed that Ga/Gb, which is the ratio of detected light quantities of both the position detection lights, can be detected in the light detector 15, the following is realized.

$$Ga/Gb = (fa \cdot Ea)/(fb \cdot Eb) = (fa/fb) \cdot (Ia/Ib)$$

Accordingly, if values that correspond to the ratio of light emission quantities Ea/Eb and the ratio of control amounts Ia/Ib are known, the ratio of attenuation coefficients can also be known. If there is a linear relationship between the ratio of the attenuation coefficients and the ratio of traveling distances of both the position detection lights, position information of the target object Ob can be obtained through pre-setting of the linear relationship.

As a method of obtaining the ratio of the attenuation coefficients fa/fb, for example, the position detection light source 12A and the position detection light source 12B are turned on and off in reverse phase (for example, square wave or sine wave drive signals are operated to have a phase difference of 180° at a frequency where the phase difference due to the difference between the traveling distances can be disregarded), and then the waveforms of the detected light quantities are analyzed. More realistically, for example, the control amount Ia of one side is fixed (Ia=Im), the control amount Ib of the other side is controlled so that the detected waveform is unable to be observed, that is, so that the ratio of detected light quantities Ga/Gb becomes "1", and the ratio of attenuation coefficients fa/fb is derived from the control amount Ib=Im·(fa/fb) at that time.

Also, the following is realized so that the sum of the control amounts is constant.

$$Im = Ia + Ib$$

In this case, since the following equation is satisfied,

$$Ib = Im \cdot fa/(fa/fb)$$

$$fa/(fa+fb) = \alpha,$$

The ratio of attenuation coefficients is obtained by the following equation.

$$fa/fb = \alpha/(1-\alpha)$$

Accordingly, the position information in a direction indicated by an arrow A of the target object Ob can be acquired by driving the position detection light source 12A and the position detection light source 12B in reverse phase. Also, the position information in a direction indicated by an arrow B of the target obj ect Ob can be acquired by driving the position detection light source 12C and the position detection light source 12D in reverse phase. Accordingly, in the control system, the position coordinates on the XY plane of the target object Ob can be acquired by sequentially performing the detection operation in directions A and B. That is, according to the optical position detection apparatus 10 in this embodiment, the position coordinates on the XY plane of the target object Ob is acquired by emitting the position detection light through an alternative light-up by changing the combination of the position detection light sources of one portion and the position detection light sources of the other portion with the same number among four position detection light sources 12A to 12D.

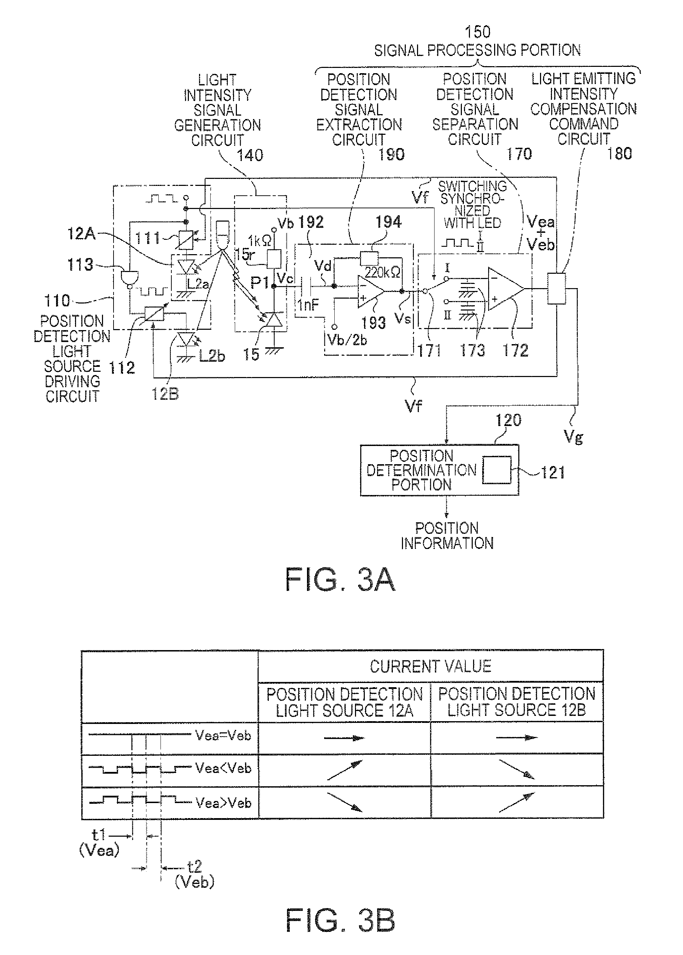

As described above, in acquiring the plane position information inside the detection region 10R of the target object Ob based on the ratio of light quantities of the position detection lights detected by the light detector 15, a microprocessor unit (MPU) is used as the signal processing portion, and accordingly, a configuration that performs processing according to the execution of predetermined software (operation program) may be adopted. Also, to be described later with reference to Figs. 3A and 3B, a configuration in which a signal processing portion using hardware such as a logic circuit performs the processing may be adopted. The signal processing portion may be inserted as a part of a display apparatus 100 having the position detection function, or may be configured inside an electronic appliance on which the display apparatus 100 having the position detection function is mounted.

Configuration Example of a Signal Processing Portion

Figs. 3A and 3B are explanatory views illustrating the contents of signal processing in the optical position detection apparatus 10 to which the invention is applied and the display apparatus 100 having the position detection function. Figs. 3A and 3B are explanatory views illustrating the optical position detection apparatus 10 to which the invention is applied and the display apparatus 100 having the position detection function and the contents of processing in a light emitting intensity compensation command unit of the signal processing portion.

As illustrated in Fig. 3A, in the optical position detection apparatus 10 and the display apparatus 100 having the position detection function according to this embodiment, a position detection light source driving circuit 110 applies a drive pulse to the position detection light source 12A through a variable resistor 111, and applies a drive pulse to the position detection light source 12B through an inversion circuit 113 and a variable resistor 112. Accordingly, the position detection light source driving circuit 110 modulates position detection lights L2a and L2b by applying an inverse drive pulse to the position detection light source 12A and the position detection light source 12B, and emits the modulated position detection lights. Also, a common light detector 15 receives the lights which are the position detection lights L2a and L2b reflected from a target object Ob. In a light intensity signal generation circuit 140, a resistor 15r of about 1k$\Omega$ is electrically connected in series to the light detector 15, and a bias voltage Vb is applied to both end terminals thereof.

In the light intensity signal generation circuit 140, to a connection point P1 of the light detector 15 and the resistor 15r, a signal processing portion 150 is electrically connected. A detection signal Vc output from the connection point P1 of the light detector 15 and the resistor 15r is indicated by a following equation.

$$Vc=V15 \ (V15+ \text{ resistance value of the resistor } 15r)$$

Here, V15 is an equivalent resistance of the light detector 15.

Accordingly, if a case where an environmental light is not incident to the light detector 15 and a case where an environmental light is incident to the light detector 15 are compared with each other, the level and the amplitude of the detection signal Vc become greater in the case where the environmental light is incident to the light detector 15.

The signal processing portion 150 is briefly provided with a position detection signal extraction circuit 190, a position detection signal separation circuit 170, and a light emitting intensity compensation command circuit 180.

The position detection signal extraction circuit 190 is provided with a filter 192 composed of a capacitor of about In, and this filter 192 functions as a high-pass filter that removes a DC component from the signal output from the connection point P1 of the light detector 15 and the resistor 15r.

Accordingly, by the filter 192, the position detection signal Vd of the position detection light L2a and L2b by the light detector 15 is extracted from the detection signal Vc output from the connection point P1 of the light detector 15 and the resistor 15r. That is, since the environmental light can be considered to have a constant intensity in a certain period in comparison to the modulated position detection lights L2a and L2b, a low-frequency component or the DC component due to the environmental light is removed.

Also, the position detection signal extraction circuit 190 has an addition circuit 193 that is provided with a feedback resistor 194 of about 220k$\Omega$ at the rear end of the filter 192, and the position detection signal Vd extracted by the filter 192 is output to the position detection signal separation circuit 170 as a position detection signal Vs which overlaps a voltage V/2 that is 1/2 of the bias voltage Vb.

The position detection signal separation circuit 170 is provided with a switch 171 that performs a switching operation in synchronization with a drive pulse that is applied to the position detection light source 12A, a comparator 172, and a capacitor 173 that is electrically connected to input lines of the comparator 172. Accordingly, if the position detection signal Vs is input to the position detection signal separation circuit 170, an effective value Vea of the position detection signal Vs in a period when the position detection light L2a lights up and an effective value Veb of the position detection signal Vs in a period when the position detection light L2b lights up are alternately output from the position detection signal separation circuit 170 to the light emitting intensity compensation command circuit 180.

The light emitting intensity compensation command circuit 180 performs a process as illustrated in Fig. 3B by comparing the effective values Vea and Veb, and outputs a control signal Vf to the position detection light source driving circuit 110 so that the effective value Vea of the position detection signal Vs in a period when the position detection light L2a lights up and the effective value Veb of the position detection signal Vs in a period when the position detection light L2b lights up become the same level. That is, the light emitting intensity compensation command circuit 180 compares the effective value Vea of the position detection signal Vs in a period when the position detection light L2a lights up and the effective value Veb of the position detection signal Vs in a period when the position detection light L2b lights up with each other, and if they are the same value, the light emitting intensity compensation command circuit 180 maintains the driving condition of the current state of the position detection light sources 12A and 12B. By contrast, if the effective value Vea of the position detection signal Vs in a period when the position detection light L2a lights up is lower than the effective value Veb of the position detection signal Vs in a period when the position detection light L2b lights up, the light emitting intensity compensation command circuit 180 heightens the light emission quantity of the position detection light source 12A by lowering the resistance value of the variable resistor 111. Also, if the effective value Veb of the position detection signal Vs in a period when the position detection light L2b lights up is lower than the effective value Vea of the position detection signal Vs in a period when the position detection light L2a lights up, the light emitting intensity compensation command circuit 180 heightens the light emission quantity of the position detection light source 12B by lowering the resistance value of the variable resistor 112.

By doing this, in the optical position detection apparatus 10 and the display apparatus 100 having the position detection function, the light emitting intensity compensation command circuit 180 of the signal processing portion 150 controls the control amount (current amount) of the position detection light sources 12A and 12B so that the detection amounts of the position detection lights L2a and L2b, which are detected by the light detector 15, become equal to each other. Accordingly, the light emitting intensity compensation command circuit 180 outputs to the position determination portion 120 information regarding the control amounts of the position detection light sources 12A and 12B so that the effective value Vea of the position detection signal Vs in a period when the position detection light L2a lights up and the effective value Veb of the position detection signal Vs in a period when the position detection light L2b lights up become the same level, as the position detection signal Vg, and thus the position determination portion 120 can obtain the position coordinates in a direction indicated by an arrow A of the target object Ob in the detection region 10R. Also, using the same principle, the position determination portion 120 can obtain the position coordinates in a direction indicated by an arrow B of the target object Ob in the detection region 10R. Accordingly, the position determination portion 120 can acquire the position coordinates in an XY plane of the target object Ob.

Also, in this embodiment of the invention, in the position detection signal extraction circuit 190, the filter 192 extracts the position detection signal Vd by removing the DC component which is caused by the environmental light from the detection signal Vc output from the connection point P1 of the light detector 15 and the resistor 15r. Accordingly, even in the case where the detection signal Vc output from the connection point P1 of the optical detector 15 and the resistor 15r includes a signal component which is caused by an infrared component of the environmental light, the influence of the environmental light can be cancelled.

A Position Detection Method in this Embodiment

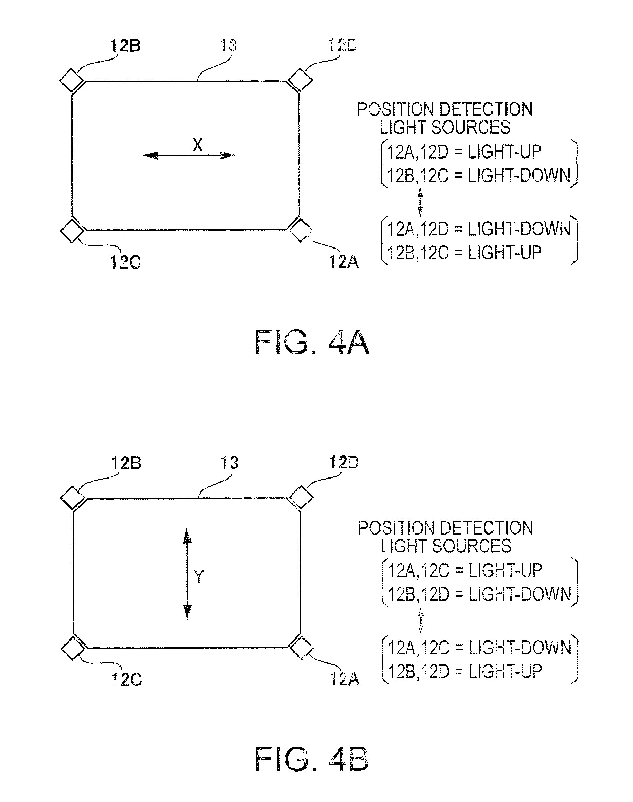

Figs. 4A and 4B are explanatory views illustrating light-up patterns of position detection light sources during the position detection in the optical position detection apparatus 10 to which the invention is applied and the display apparatus 100 having the position detection function. Figs. 4A and 4B illustrate the position detection in a long-side direction of a light guide plate 13 (detection region 10R) and the position detection in a short-side direction thereof.

In the optical position detection apparatus 10 in this embodiment, four position detection light sources 12A to 12D are so configured that the four position detection light sources 12A to 12D emit the position detection lights through alternate light-up by changing a combination of one portion of the position detection light sources and the other portion of the position detection light sources the number of which is equal to that of the one portion of the position detection light sources. The optical position detection apparatus 10 adopts the following configuration. That is, in the optical position detection apparatus 10 in this embodiment of the invention, in the case of performing the position detection in the long-side direction of the light guide plate 13 (detection region 10R), as illustrated in Fig. 4A, the position detection light sources 12A and 12D are driven in phase, the position detection light sources 12B and 12C are driven in phase, and the position detection light sources 12A and 12D and the position detection light sources 12B and 12C are driven in reverse phase, so that the intensity distribution of the position detection lights is generated in the long-side direction (X direction) of the light guide plate 13 (detection region 10R).

Also, in the case of performing the position detection in the short-side direction of the light guide plate 13 (detection region 10R), the position detection is performed in the timing different from that in the position detection in the long-side direction. That is, as illustrated in Fig. 4B, the position detection light sources 12A and 12C are driven in phase, the position detection light sources 12B and 12D are driven in phase, and the position detection light sources 12A and 12C and the position detection light sources 12B and 12D are driven in reverse phase, so that the intensity distribution of the position detection lights is generated in the short-side direction (Y direction) of the light guide plate 13 (detection region 10R).

In this method, the position coordinates on the XY plane of the target object Ob can be acquired. Also, according to the configuration whereby a plurality of position detection light sources light up simultaneously, for example, the contrast inclination distribution of the position detection light is obtained in a wider region than that of the configuration whereby one position detection light source lights up, and thus more accurate position detection becomes possible.

Also, in this embodiment, in the case of performing the position detection in the long-side direction of the light guide plate 13 (detection region 10R), the position detection in the long-side direction is performed based on the difference in results of detection by the light detector 15 between the period in which the position detection light sources 12A and 12D light up and the period in which the position detection light sources 12B and 12C light up. Also, in the case of performing the position detection in the short-side direction of the light guide plate 13 (detection region 10R) , the position detection in the short-side direction is performed based on the difference in results of detection by the light detector 15 between the period in which the position detection light sources 12A and 12C light up and the period in which the position detection light sources 12B and 12D light up. Even by this method, the influence of the environmental light can be cancelled. Also, if the intensity distribution as illustrated in Fig. 2C corresponds to simple increase or simple decrease, the position detection can be performed even in the case where there is no linear relationship.

Detailed Configuration of a Light Guide Plate

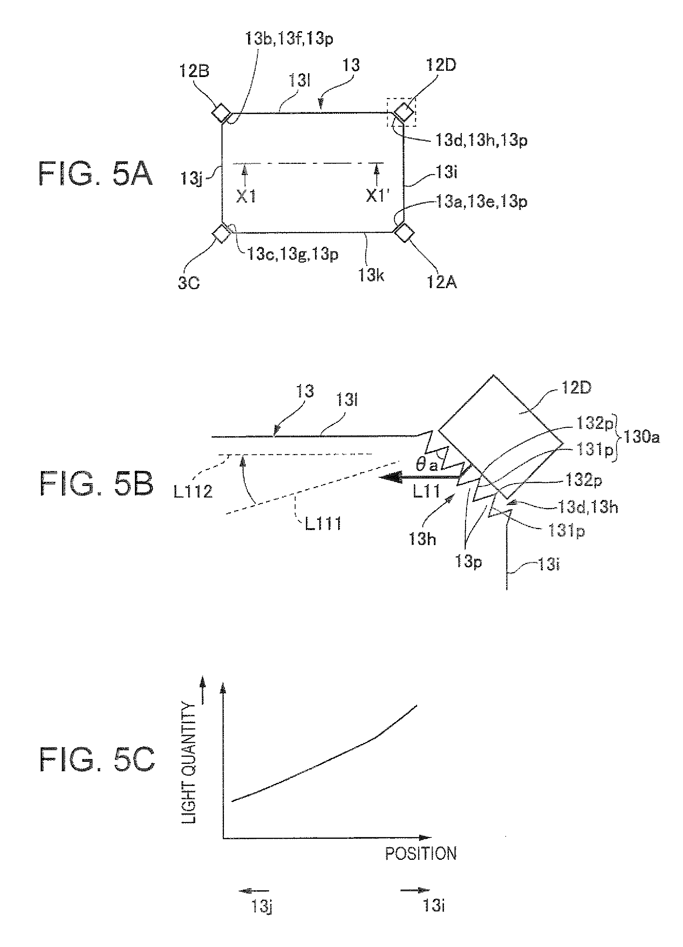

Figs. 5A to 5C are explanatory views illustrating a light guide plate 13 that is used in the optical position detection apparatus 10 to which the invention is applied and the display apparatus 100 having the position detection function. Figs. 5A, 5B, and 5C are a plan view of the light guide plate 13, an enlarged plan view of a portion surrounded by a dotted line of four corner portions of the light guide plate 13, and an explanatory view illustrating the intensity distribution of the position detection light emitted from the light guide plate 13. In this case, the light quantity distribution as illustrated in Fig. 5C corresponds to the light quantity distribution in a position indicated by line X1-X1' in Fig. 5A.

As illustrated in Figs. 5A and 5B, in the optical position detection apparatus 10 according to this embodiment and the display apparatus 100 having the position detection function, light incident portions 13a, 13b, 13c, and 13d are formed on four corner portions 13e, 13f, 13g, and 13h of the light guide plate 13, respectively, and the position detection light sources 12A, 12B, 12C, and 12D are installed on the light incident portions, respectively.

In this embodiment of the invention, when the light guide plate 13 is seen in a plan view, the light incident portions 13a, 13b, 13c, and 13d have a shape (concavo-convex shape) in which a concavo-convex 13p is formed provided in a portion where the corner portions 13e, 13f, 13g, and 13h of the light guide plate 13 are obliquely cut out with respect to the long-side portions 13k and 131 and the short-side portions 13i and 13j of the corresponding light guide plate 13. In the embodiment of the invention, the corner portions 13e, 13f, 13g, and 13h are cut out to form an angle of 45° with respect to the long-side portions 13k and 131 and the short-side portions 13i and 13j, and the center optical axis of the position detection light sources 12A, 12B, 12C, and 12D forms an angle of 45° with respect to the long-side portions 13k and 131 and the short-side portions 13i and 13j. The corner portions 13e, 13f, 13g, and 13h may be cut out to be orthogonal to the diagonal line, and in this case, the center optical axis of the position detection light sources 12A, 12B, 12C, and 12D looks toward the diagonal line.

In this embodiment, the plurality of concavo-convexes 13p, as illustrated in Fig. 5B, is formed by a plurality of prism type convex portions 130a (convex portions) that looks toward a peak 132p, on the position detection light source 12D. It is preferable that the angle θa of the peak 132p is 50° to 80°, and in this embodiment, the angle θa of the peak 132p is set to 60°.

In the concavo-convexes 13p as above, the inclined surface positioned on the side of the short-side portion 13i functions as a deflection incident surface 131p that deflects a portion of the position detection light incident from the light incident portion 13d in a direction that follows the long-side portion 131 of the light guide plate 13 by the refraction. That is, although the position detection light emitted from the position detection light source 12D includes lights which are headed toward a direction that follows the long-side portion 131, the diagonal direction of the light guide plate 13, and the direction that follows the short-side portion 13i, respectively, a portion of the light that is headed toward a diagonal direction of the light guide plate 13, as illustrated as an arrow L11 in Fig. 5B, is deflected in a traveling direction that follows the long-side portions 131 by the refraction on the deflection incident surface 131p. Accordingly, a boundary region on the side of the long-side portion 131 of a region that has a predetermined intensity in the intensity distribution of the position detection light L2d emitted from the light guide plate 13 approximates the long-side portion 131 from the position as indicated by a dotted line L111 in Fig. 5B to a position indicated by a dotted line L112. Accordingly, in the intensity distribution of the position detection light L2d emitted from the light guide plate 13, the intensity in the direction that follows the long-side portion 131 can be improved. The same effect can be obtained with respect to other corner portions 13e, 13f, and 13g.

Accordingly, in performing the position detection in the long-side direction of the light guide plate 13, as described above with reference to Fig. 4A, if the position detection light sources 12A and 12D light up and the position detection sources 12B and 12C light down, the intensity of the position detection light emitted from the light guide plate 13 is simply reduced from the short-side portion 13i to the short-side portion 13j as illustrated in Fig. 5C. In the case where the position detection light sources 12B and 12C light up and the position detection light sources 12A and 12D light down, the same effect is obtained.

Primary Effects of the Embodiment

As described above, in the optical position detection apparatus 10 according to this embodiment and the display apparatus 100 having the position detection function, if the position detection lights L2a to L2d are emitted from the light emission surface 13s of the light guide plate 13 and are reflected by the target object Ob arranged on the emission side of the light guide plate 13, this reflected lights are detected by the light detector 15. Here, if the intensity of the position detection lights L2a to L2d in the detection region 10R and the distance from the position detection light sources 12A to 12D have a predetermined correlation, the position of the target object Ob can be detected from the light receiving intensity obtained through the light detector 15. Accordingly, it is not necessary to arrange a plurality of light elements along the detection region 10R, and thus the optical position detection apparatus 10 with low cost and with low power consumption can be configured.

Also, in this embodiment, the light guide plate 13 is substantially in the form of a rectangular plane, and the optical incident portions 13a, 13b, 13c, and 13d and the position detection light sources 12A, 12B, 12C, and 12D are installed on the four corner portions 13e, 13f, 13g, and 13h of the light guide plate in a one-to-one manner. Accordingly, even in the neighborhood of the corner portions 13e, 13f, 13g, and 13h of the light guide plate 13, the intensity of the position detection lights L2a to L2d emitted from the light guide plate 13 becomes high.

Also, on the light incident portions 13a, 13b, 13c, and 13d, a plurality of concavo-convexes 13p provided with the deflection incident surface 131p for deflecting by the reflection a portion of the incident position detection lights L2a to L2d in a direction that follows the long-side portions 13k, and 131 of the light guide plate 13 is formed. Accordingly, the light quantity of the position detection lights L2a to L2d traveling in the direction that follows the long-side portions 13k, and 131 of the light guide plate 13 can be heightened. Accordingly, when performing the position detection in the long-side direction of the light guide plate 13, the light emission quantity of the position detection light L2a to L2d in the detection region 10R has an appropriate intensity distribution, and thus the accuracy in position detection can be heightened.

Also, in this embodiment, the plurality of concavo-convexes 13p is formed by a plurality of prism type convex portions 130a toward the peak, on the position detection light sources 12A, 12B, 12C, and 12D. Further, the angle θa of the peak 132p is 50° to 80°. Here, if the angle θa of the peak 132p exceeds 80°, the light may be excessively deflected in a direction that follows the side of the light guide plate 13, whereas if the angle θa of the peak 132p is smaller than 50°, the light may not be sufficiently deflected in a direction that follows the long-side portions 13k and 131 of the light guide plate 13. In the embodiment of the invention, the angle θa of the peak 132p is set to 60°, which is in the optimum range. Accordingly, the intensity distribution that is appropriate to the light emission quantity of the position detection lights L2a to L2d can be formed in the detection region 10R.

Another Configuration Example of Light Guide Plate 13

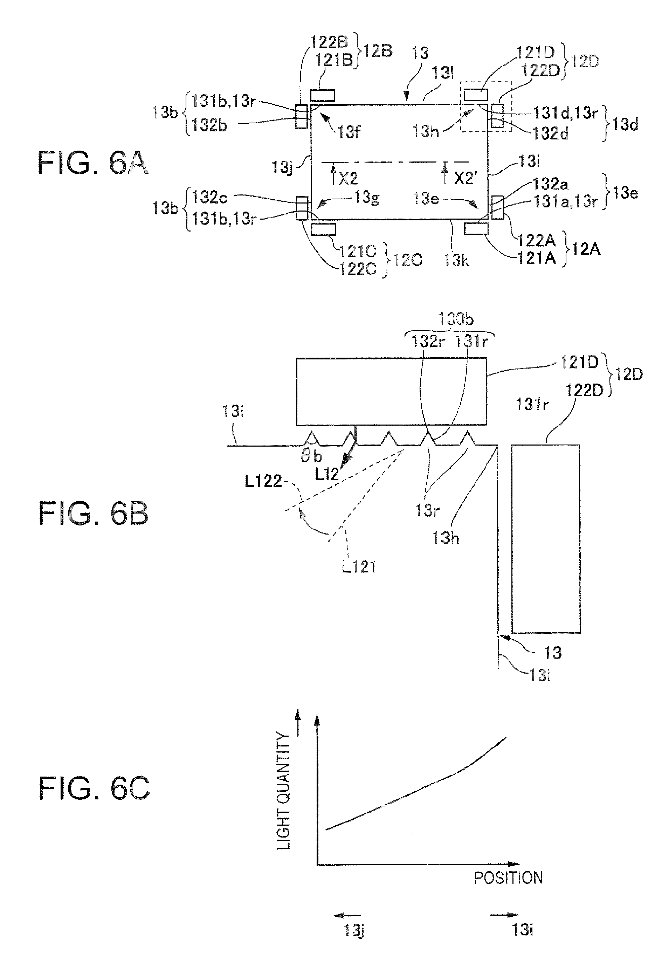

Figs. 6A to 6C are explanatory views of another light guide plate 13 using the optical position detection apparatus 10 and the display apparatus 100 having a position detection function to which the invention is applied. Figs. 6A, 6B, and 6C are respectively a plan view of the light guide plate 13, a plan view showing one corner portion surrounded by a dotted line from among the corner portions of the light guide plate 13 on magnification scale, and an explanatory view showing the intensity distribution of position detection light emitted from the light guide plate 13. The light quantity distribution shown in Fig. 6C corresponds to a light quantity distribution at a position indicated by the line X2-X2' of Fig. 6A. The basic configuration of this embodiment is the same as that in the foregoing embodiment, and thus common parts are represented by the same reference numerals and description thereof will be omitted.

As shown in Figs. 6A and 6B, in the optical position detection apparatus 10 and the display apparatus 100 having a position detection function of this embodiment, the light guide plate 13 has light incident portions (light incident portions 13a, 13b, 13c, and 13d) for the respective four corner portions (corner portions 13e, 13f, 13g, and 13h), and position detection light sources (position detection light sources 12A, 12B, 12C, and 12D) are respectively provided at the light incident portions.

The four light incident portions 13a, 13b, 13c, and 13d include first light incident portions 131a, 131b, 131c, and 131d provided at the long side portions 13k and 131 of the light guide plate 13 and second light incident portions 132a, 132b, 132c, and 132d provided on the short side portions of the light guide plate 13. In correspondence to the structures of the light incident portions 13a, 13b, 13c, and 13d, the position detection light sources 12A, 12B, 12C, and 12D are respectively provided as first light emitting devices 121A, 121B, 121C, and 121D which emit position detection light toward the first light incident portions 131a, 131b, 131c, and 131d, and as second light emitting devices 121A, 121B, 121C, and 121D which emit position detection light toward the second light incident portions 132a, 132b, 132c, and 132d. The first light emitting devices 121A, 121B 121C, and 121D respectively have the center optical axes perpendicular to the first light incident portions 131a, 131b, 131c, and 131d, and the second light emitting devices 122A, 122B, 122C, and 122D respectively have the center optical axes perpendicular to the second light incident portions 132a, 132b, 132c, and 132d.

In this embodiment, the second light incident portions 132a, 132b, 132c, and 132d are flat surfaces. In contrast, the first light incident portions 131a, 131b, 131c, and 131d have a shape (concavo-convex shape) in which a plurality of concavo-convexes 13r are formed.

In this embodiment, as shown in Fig. 6B, a plurality of concavo-convexes 13r are formed by a plurality of prism type convex portions 130b with a peak 132r toward the first light emitting device 121D. The angle $\theta b$ of the peak 132r is preferably in a range of 50° to 80°. In this embodiment, the angle $\theta b$ of the peak 132r is 60°.

In the concavo-convexes 13r configured as above, an oblique surface located at the corner portion 13h functions as a deflection incident surface 131r which deflects part of position detection light incident from the light incident portion 13d in a direction along the long side 131 of the light guide plate 13 by reflection. That is, position detection light emitted from the position detection light source 12D includes light in a direction along the short side 13i, and the traveling direction of part of such light is deflected in the direction along the long side 131 by reflection at the deflection incident surface 131r, as indicated by an arrow L12 of Fig. 6B. For this reason, in the intensity distribution of position detection light L2d emitted from the light guide plate 13, a boundary region of the long side 131 in a region having predetermined intensity approaches the long side 131 from a position indicated by a dotted line L121 of Fig. 6B to a position indicated by a dotted line L122. Thus, in the intensity distribution of position detection light L2d emitted from the light guide plate 13, intensity in the direction along the long side 131 can be increased. The same is applied to other corner portions 13e, 13f, and 13g.

With this configuration, similarly to the foregoing embodiment, when position detection in the long-side direction of the light guide plate 13 (detection region 10R) is carried out, the first light emitting devices 121A and 121D and the second light emitting devices 122A and 122D are driven in phase, and the first light emitting devices 121B and 121C and the second light emitting devices 122B and 122C are driven in phase. At this time, the first light emitting devices 121A and 121D and the second light emitting devices 122A and 122D, and the first light emitting devices 121D and 121C and the second light emitting devices 122B and 122C are driven in reverse phase. In this way, the intensity distribution of position detection light is generated in the long-side direction (X direction) of the light guide plate 13 (detection region 10R).

Position detection in the short-side direction of the light guide plate 13 (detection region 10R) is carried out at the timing different from position detection in the long-side direction. When position detection in the long-side direction of the light guide plate 13 (detection region 10R) is carried out, the first light emitting devices 121A and 121C and the second light emitting devices 122A and 122C are driven in phase, and the first light emitting devices 121B and 121D and the second light emitting devices 122B and 122D are driven in phase. At this time, the first light emitting devices 121A and 121C and the second light emitting devices 122A and 122C, and the first light emitting devices 121B and 121D and the second light emitting devices 122B and 122D are driven in reverse phase. In this way, the intensity distribution of position detection light is generated in the long-side direction (X direction) of the light guide plate 13 (detection region 10R).

The first light incident portions 131a, 131b, 131c, and 131d have a plurality of concavo-convexes 13r with the deflection incident surface 131r. The deflection incident surface 131r deflects part of position detection light input from the first light incident portions 131a, 131b, 131c, and 131d in the direction along the long side portions 13k and 131. For this reason, in carrying out position detection in the long-side direction of the light guide plate 13, if the first light emitting devices 121A and 121D and the second light emitting devices 122A and 122D are turned on, and the first light emitting devices 121B and 121C and the second light emitting devices 122B and 122C are turned off, as shown in Fig. 6C, the intensity of position detection light emitted from the light guide plate 13 monotonously decreases from the short side 13i toward the short side 13j. The same is applied to a case where the first light emitting devices 121B and 121C and the second light emitting devices 122B and 122C are turned on, and the first light emitting devices 121A and 121D and the second light emitting devices 122A and 122D are turned off. For this reason, according to this embodiment, similarly to the above-described first embodiment 1, position detection accuracy can be increased.

Other Embodiments

The optical position detection apparatus 10 and the display apparatus 100 having a position detection function is not limited to the foregoing embodiments, and various modification may be made without departing from the scope and spirit of the invention. For example, although in the foregoing embodiments, the single light detector 15 is provided, another light detector may be disposed at an appropriate position.

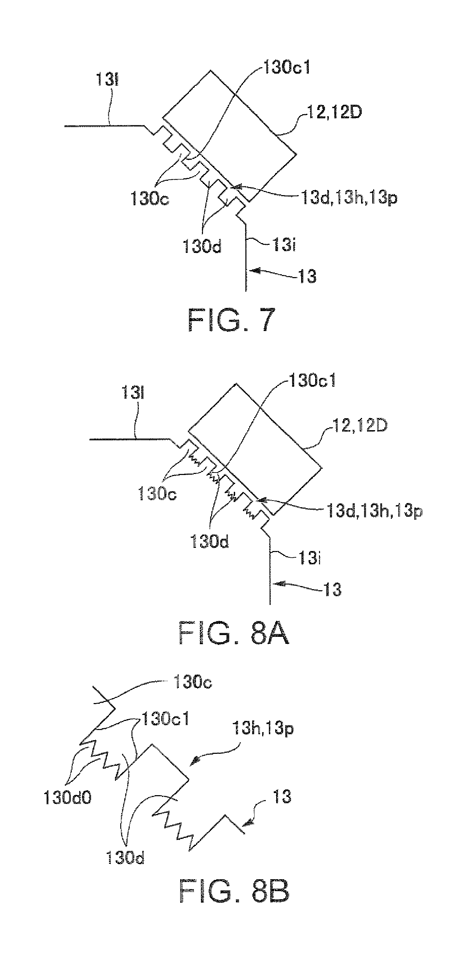

Although in the foregoing embodiments, the triangular prism type convex portions 130a or 130b are provided in constituting the concavo-convexes 13p or 13r having the deflection incident surface 131p or 131r, as will be described below with reference to Figs. 7 to 14, concavo-convexes 13p or 13r having a sine-wave or square-wave shape may be formed. Although Figs. 7 to 14 show convex portions or concave portions which can be used in constituting the concavo-convexes 13p described with reference to Figs. 5A to 5C, convex portions or concave portions which will be described with reference to Figs. 7 to 14 may be used in constituting the concavo-convexes 13r described with reference to Figs. 6A to 6C. The configuration which will be described with reference to Figs. 7 to 14 is basically the same as the configuration described with reference to Figs. 5A to 5C, thus common parts are represented by the same reference numerals and detailed description thereof will be omitted.

First Modification of Concavo-Convexes 13p

Fig. 7 is an explanatory view of a first modification of the concavo-convexes 13p which are formed in the light guide plate 13 of the optical position detection apparatus 10 to which the invention is applied. As shown in Fig. 7, in this embodiment, in forming the concavo-convexes 13p at the light incident portion 12d of the light guide plate 13, a plurality of convex portions 130c having a rectangular or square planar shape (quadrangle) are formed, and as a result, concave portions 130d are formed between the convex portions 130c. For this reason, position detection light which is emitted as diverging light from the position detection light source 12D is deflected at side surfaces 130c1 (deflection incident surface) of the convex portions 130c when being input to the light guide plate 13. Thus, position detection light appropriately travels in the light guide plate 13, such that the light quantity of position detection light emitted from the light guide plate 13 has an appropriate intensity distribution.

Second Modification of Cancavo-Canvexes 13p

Figs. BA and 8B are explanatory views showing a second modification of the concavo-convexes 13p which are formed in the light guide plate 13 of the optical position detection apparatus 10 to which the invention is applied. Figs. 8A and 8B are a plan view of the concavo-convexes 13p and an explanatory view of the bottom of a concave portion 130d on magnification scale.
As shown in Figs. 8A and BE, in this embodiment, in forming the concavo-canvexee 13P at the light incident portion 12d of the light guide plate 13, a plurality of convex portions 130c having a rectangular or square planar shape (quadrangle) are formed, and as a result, concaves portions 130d are formed between the convex portions 130c. At the bottom of the concave portion 130d, a prism type convex portion 130d0 having a size smaller than the convex portion 130c is formed. For this reason, position detection light which is emitted as diverging light from the position detection light source 12D is deflected at side surfaces 130d1 (deflection incident surface) of the convex portions 130c and oblique surfaces (deflection incident surface) of the prism type convex portions 130c0 when being input to the light guide plate 13. Thus, position detection light appropriately travels in the light guide plate 13, such that the light quantity of position detection light emitted from the light guide plate 13 has an appropriate intensity distribution.

Third Modification of Concavo-Convexes 13p

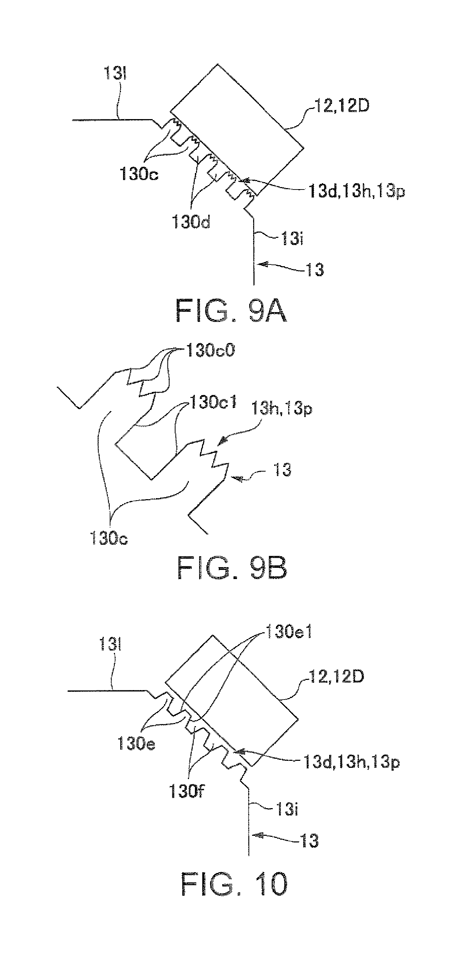

Figs. 9A and 9B are explanatory views showing a third modification of the concavo-convexes 13p which are formed in the light guide plate 13 of the optical position detection apparatus 10 to which the invention is applied. Figs. 9A and 9B are a plan view of the concavo-convexes 13p and an explanatory view showing a front end portion of the convex portion 130c on magnification scale.
As shown in Figs. 9A and 9B, in this embodiment, in forming the concavo-convexes 13p at the light incident portion 12d of the light guide plate 13, a plurality of convex portions 130c having a rectangular or square planar shape (quadrangle) are formed, and as a result, concave portions 130d are formed between the convex portions 130c. At the front end portion of the convex portion 130c, a prism type convex portion 130c0 having a size smaller than the convex portion 130c is formed. For this reason, position detection light which is emitted as diverging light from the position detection light source 12D is deflected at side surfaces 130c1 (deflection incident surface) of the convex portions 130c and oblique surfaces (deflection incident surface) of the prism type convex portion 130c0 when being input to the light guide plate 13. Thus, position detection light appropriately travels in the light guide plate 13, such that the light quantity of position detection light emitted from the light guide plate 13 has an appropriate intensity distribution.

Fourth Modification of Concavo-Convexes 13p

Fig. 10 is an explanatory view showing a fourth modification of the concavo-convexes 13p which are formed in the light guide plate 13 of the optical position detection apparatus 10 to which the invention is applied.
As shown in Fig. 10, in this embodiment, in forming the concavo-convexes 13p at the light incident portion 12d of the light guide plate 13, a plurality of convex portions 130e having a trapezoidal planar shape (quadrangle) are formed, and as a result, concave portions 130f are formed between the convex portions 130e. The convex portions 130e have a trapezoidal shape in which an upper base portion corresponding to a front end portion has a diameter smaller than a lower base portion on the base portion side. For this reason, side surfaces 130e1 of the convex portions 130e become outward oblique surfaces. Thus, position detection light which is emitted as diverging light from the position detection light source 12D is deflected at the side surfaces 130e1 (deflection incident surface) of the convex portions 130e when being input to the light guide plate 13. Therefore, position detection light appropriately travels in the light guide plate 13, such that the light quantity of position detection light emitted from the light guide plate 13 has an appropriate intensity distribution. In this embodiment, as described with reference to Figs. 8A and 8B or Figs. 9A and 9B, a prism type convex portion may be formed at the front end portion of the convex portion 130e or at the bottom of the concave portion 130f.

Fifth Modification of Concavo-Convexes 13p

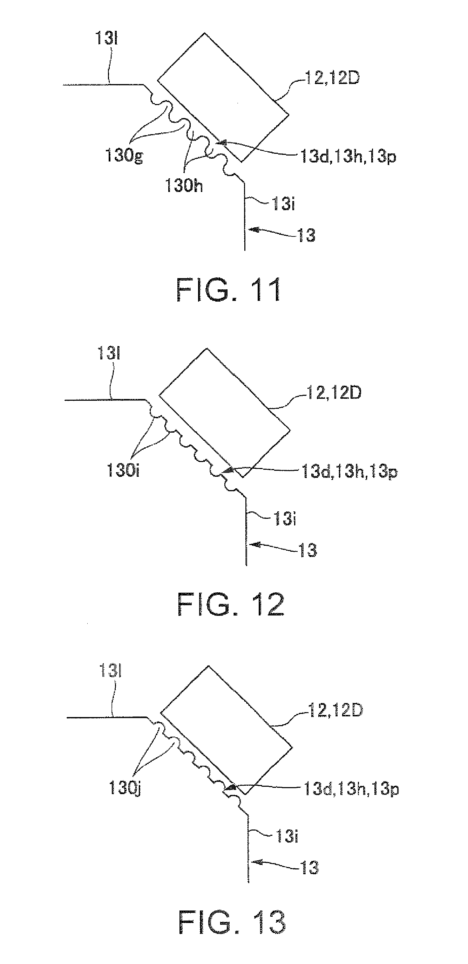

Fig. 11 is an explanatory view showing a fifth modification of the concavo-convexes 13p which are formed in the light guide plate 13 of the optical position detection apparatus 10 to which the invention is applied.
As shown in Fig. 11, in this embodiment, in forming the concavo-convexes 13p at the light incident portion 12d of the light guide plate 13, a plurality of convex portions 130g (curved convex portions) and a plurality of concave portions 130h (curved concave portions) are formed in which curves are successively connected to form a corrugated planar shape, and the front end portion of the convex portion 130g and the bottom of the concave portion 130h are curved. For this reason, position detection light which is emitted as diverging light from the position detection light source 12D is deflected at the front end portions (deflection incident surface) of the convex portions 130g or the bottom (deflection incident surface) of the concave portions 130h when being input to the light guide plate 13. Thus, position detection light appropriately travels in the light guide plate 13, such that the light quantity of position detection light emitted from the light guide plate 13 has an appropriate intensity distribution.

Sixth Modification of Concavo-Convexes 13p

Fig. 12 is an explanatory view showing a sixth modification of the concavo-convexes 13p which are formed in the light guide plate 13 of the optical position detection apparatus 10 to which the invention is applied.
As shown in Fig. 12, in this embodiment, in forming the concavo-convexes 13p at the light incident portion 12d of the light guide plate 13, a plurality of concave portions 130i (concave curved surface) having a concave lens-shaped planar shape recessed in an arc shape are formed. For this reason, position detection light which is emitted as diverging light from the position detection light source 12D is deflected at the concave curved surfaces (deflection incident surface) of the concave portions 130i when being input to the light guide plate 13. Thus, position detection light appropriately travels in the light guide plate 13, such that the light quantity of position detection light emitted from the light guide plate 13 has an appropriate intensity distribution.

Seventh Modification of Concavo-Convexes 13p

Fig. 13 is an explanatory view showing a seventh modification of the concavo-convexes 13p which are formed at the light guide plate 13 of the optical position detection apparatus 10 to which the invention is applied.
As shown in Fig. 13, in this embodiment, in forming concavo-convexes 13p at the light incident portion 12d of the light guide plate 13, a plurality of convex portions 130j (convex curved surface) having a convex lens-shaped planar shape swollen in an arch shape are formed. For this reason, position detection light which is emitted as diverging light from the position detection light source 12D is deflected at the convex curved surfaces (deflection incident surface) of the convex portions 130j when being input to the light guide plate 13. Thus, position detection light appropriately travels in the light guide plate 13, such that the light quantity of position detection light emitted from the light guide plate 13 has an appropriate intensity distribution.

Eighth Modification of Concavo-Convexes 13p

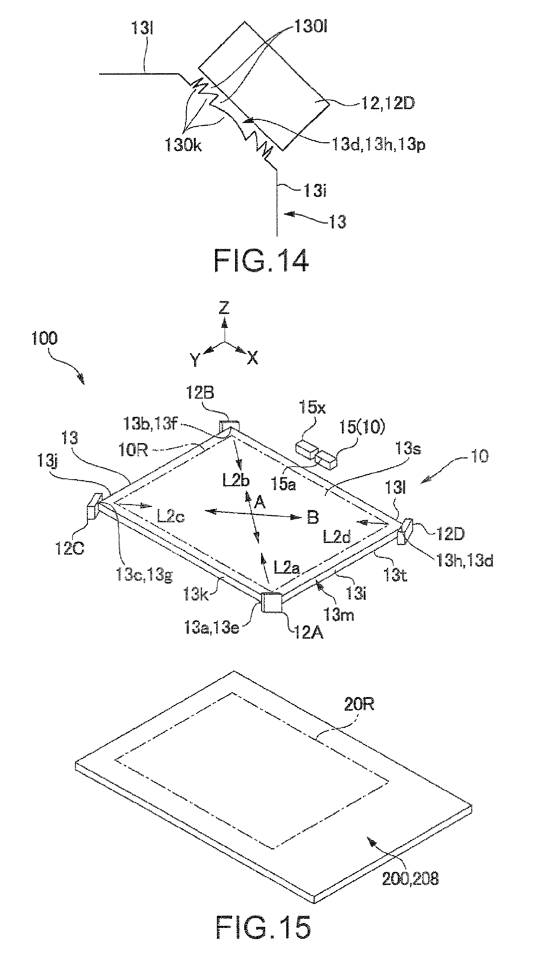

Fig. 14 is an explanatory view showing an eighth modification of the concavo-convexes 13p which are formed in the light guide plate 13 of the optical position detection apparatus 10 to which the invention is applied.
As shown in Fig. 14, in this embodiment, in forming the concavo-convexes 13p at the light incident portion 12d of the light guide plate 13, a plurality of convex portions 130k and a plurality of concave portions 1301 are formed. The convex portions 130k and the plurality of concave portions 1301 are arranged with a decreasing width from the center toward both sides, and the convex portions 130k and the concave portions 1301 constitute concavo-convexes 13p having a cross-sectional shape of a Fresnel lens. For this reason, position detection light which is emitted as diverging light from the position detection light source 12D is deflected at the side surfaces (deflection incident surface) of the convex portions 130k and the concave portions 1301 when being input to the light guide plate 13. Thus, position detection light appropriately travels in the light guide plate 13, such that the light quantity of position detection light emitted from the light guide plate 13 has an appropriate intensity distribution.

Modification of display apparatus 100 having position detection function

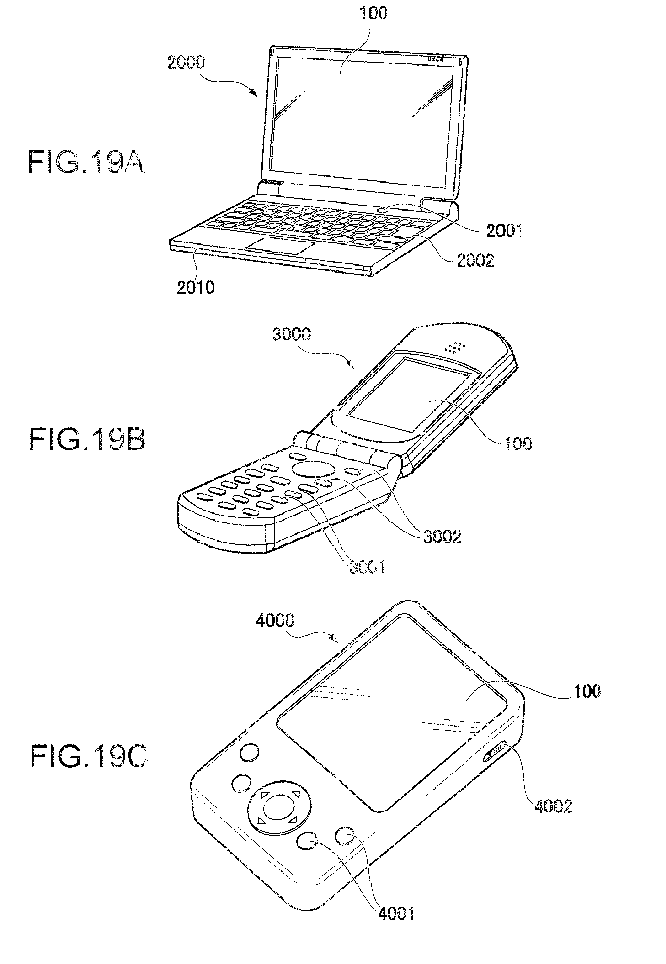

In the above embodiment, the configuration of including the projection type display apparatus 203, 207 as the image generation apparatus 200 is explained. However, as shown in Figs. 15 to 18, if a direct view type display apparatus is employed as the image generation apparatus 200, it can be used in an electronic apparatus described later with reference to Figs. 19A to 19C.

First modification of display apparatus 100 having position detection function

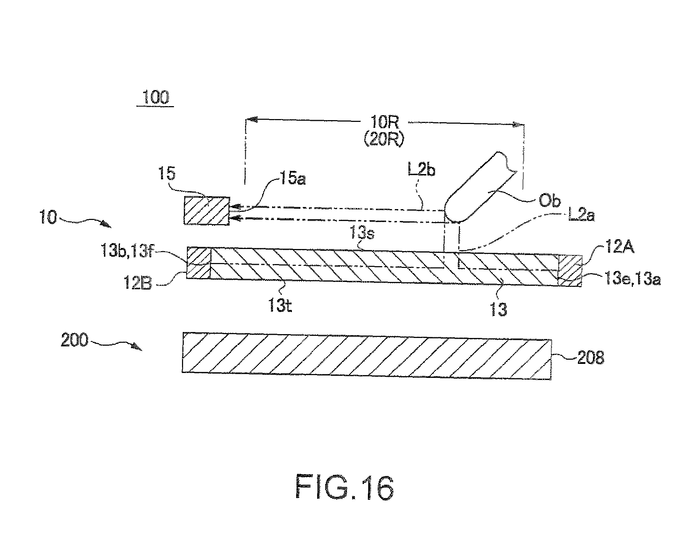

Fig. 15 and Fig. 16 are an exploded perspective view of the optical position detection apparatus 10 and the display apparatus 100 having position detection function according to the first modification of the invention, and an explanatory view illustrating a cross-sectional configuration thereof. In the display apparatus 100 having position detection function in this embodiment, since the configuration of the optical position detection apparatus 10 is the same as that of the above-described embodiment, the common parts are designated with the same reference symbols and the explanation thereof will be omitted.

The display apparatus 100 having position detection function shown in Figs. 15 and 16 includes the optical position detection apparatus 10 and the image generation apparatus 200, and the optical position detection apparatus 10 includes the position detection light source 12 emitting position detection light, the light guide plate 13, and the optical detector 15 having the light receiving portion 15a directed to the detection area 10R. The image generation apparatus 200 is a direct view type display apparatus 208 such as an organic electroluminescence apparatus and a plasma display apparatus, and is disposed opposite to the input operation side with respect to the optical position detection apparatus 10. The direct view type display apparatus 208 includes an image display area 20R which is overlapped with the light guide plate 13 when seen from the plane, and the image display area 20R overlaps with the detection area 10R when seen from the plane.

Second modification of display apparatus 100 having position detection function

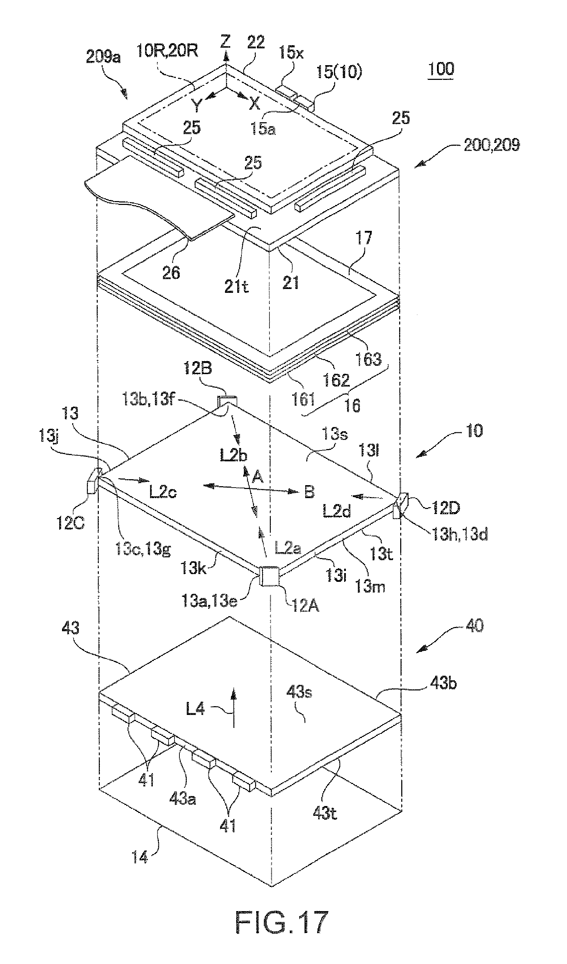

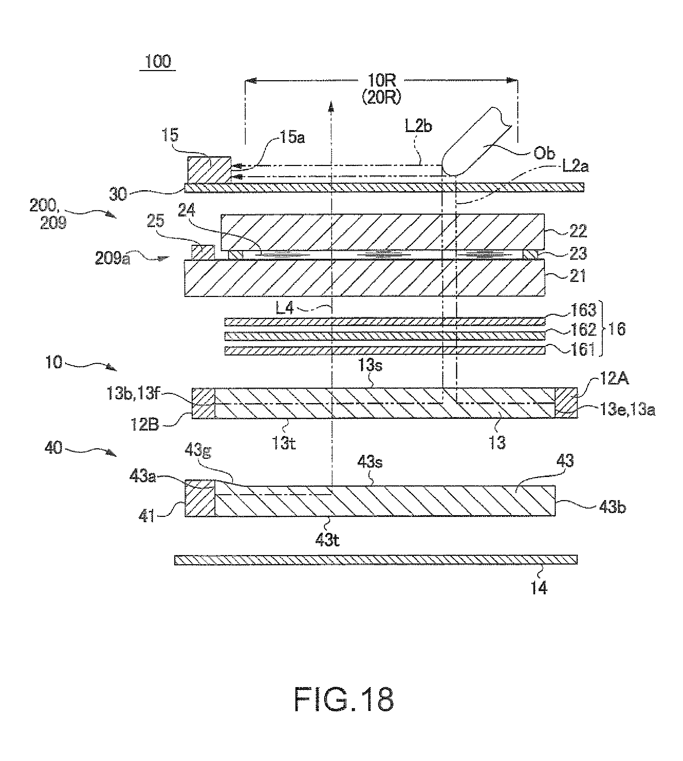

Figs. 17 and 18 are explanatory views of the optical position detection apparatus 10 and the display apparatus 100 having position detection function according to the second modification of the invention. Fig. 17 and Fig. 18 are an exploded perspective view of the optical position detection apparatus 10 and the display apparatus 100 having position detection function according to the second modification of the invention, and an explanatory view illustrating a cross-sectional configuration thereof, respectively. In the display apparatus 100 having position detection function in this embodiment, since the configuration of the optical position detection apparatus 10 is the same as that of the above-described embodiment, the common parts are designated with the same reference symbols and the explanation thereof will be omitted.

The display apparatus 100 having position detection function shown in Figs. 17 and 18 includes the optical position detection apparatus 10 and the image generation apparatus 200, and the optical position detection apparatus 10 includes the position detection light source 12 emitting position detection light, the light guide plate 13, and the optical detector 15 having the light receiving portion 15a directed to the detection area 10R. The image generation apparatus 200 includes a liquid crystal apparatus 209 which is a direct view type display apparatus and a light transmissive cover 30. The liquid crystal apparatus 209 includes an image display area 20R which is overlapped with the light guide plate 13 when seen from the plane, and the image display area 20R overlaps with the detection area 10R when seen from the plane.

In the display apparatus 100 having position detection function of this embodiment, an optical sheet 16 is disposed on the light emitting side of the light guide plate 13 for making the position detection light L2a to L2d uniform, as necessary. In this embodiment, as the optical sheet 16, a first prism sheet 161 opposing the light emitting surface 13s of the light guide plate 13, a second prism sheet 162 opposing the first prism sheet 161 on the side opposite to the side where the light guide plate 13 is located, and a light diffusion plate 163 opposing the second prism sheet 162 on the side opposite to the side where the light guide plate 13 is located. Further, a rectangular frame-like light shielding sheet 17 is disposed around the optical sheet 16 on the side opposite to the side where the light guide plate 13 is located with respect to the optical sheet 16. The light shielding sheet 17 prevents the position detection light L2a to L2d emitted from the position detection light sources 12A to 12D from leaking.

The liquid crystal apparatus 209 (the image generation apparatus 200) includes a liquid crystal panel 209a on the side opposite to the side where the light guide plate 13 is located with respect to the optical sheet 16 (the first prism sheet 161, the second prism sheet 162, and the light diffusion plate 163). In this embodiment, the liquid crystal panel 209a is a light transmissive liquid crystal panel and has a structure that two light transmissive substrates 21 and 22 are bonded by a sealing material 23 and a liquid crystal 24 is filled between the substrates. In this embodiment, the liquid crystal panel 209a is an active matrix type liquid crystal panel, in which light transmissive pixel electrodes, data lines, scanning lines, and pixel switching elements (not shown) are formed on one of the two light transmissive substrates 21 and 22, and light transmissive common electrodes (not shown) are formed on the other thereof. The pixel electrodes and the common electrodes may be formed on the same substrate. In the liquid crystal panel 209a, if a scan signal is output via the scanning line for each pixel and an image signal is output via the data line, orientation of the liquid crystal 24 is controlled in each of a plurality of the pixels, and thus an image is formed in the image display area 20R.

In the liquid crystal panel 209a, one light transmissive substrate 21 is provided with a substrate extension 21t which is extended to the periphery from the contour of the other light transmissive substrate 22. Electronic components 25 constituting a drive circuit and the like are mounted on the surface of the substrate extension 21t. Further, a wiring member 26 such as a flexible printed circuit board (FPC) is connected to the substrate extension 21t. Only the wiring member 26 may be mounted on the surface of the substrate extension 21t. A polarization plate (not shown) is disposed on the outer surface side of the light transmissive substrate 21, 22, as necessary.

Here, in order to detect a plane position of the target object Ob, it is necessary to emit the position detection light L2a to L2d toward the observation side where operation by the target object Ob is performed, and the liquid crystal panel 209a is disposed close to the observation side (operation side) than the light guide plate 13 and the optical sheet 16. Thus, in the liquid crystal panel 209a, the image display area 20R is configured to transmit the position detection light L2a to L2d. When the liquid crystal panel 209a is disposed on the side opposite to the observation side of the light guide plate 13, it is not necessary to configure such that the image display area 20R transmits the position detection light L2a to L2d; however, instead of this, it is necessary to configure such that the image display area 20R can be seen from the observation side through the light guide plate 13.

The liquid crystal device 209 includes an illuminating device 40 for illuminating the liquid crystal panel 209a. In the present embodiment, the illuminating device 40 is disposed between the light guide plate 13 and the reflection plate 14 at the side of the light guide plate 13 not facing the side where the liquid crystal panel 209a is located. The illuminating device 40 includes a light source 41 for illumination and a light guide plate 43 for illumination, which emits illumination light emitted from the light source 41 for illumination while making the illumination light propagate. The light guide plate 43 for illumination has a rectangular flat shape. The light source 41 for illumination is formed by a light emitting element, such as an LED (light emitting diode), and emits, for example, white illumination light L4 in response to a driving signal output from a driving circuit (not shown). In the present embodiment, a plurality of light sources 41 for illumination is arrayed along a side portion 43a of the light guide plate 43 for illumination.

In the light guide plate 43 for illumination, an inclined surface 43g is provided in a surface portion at the light emission side adjacent to the side portion 43a (outer peripheral portion of a light emitting surface 43s at the side portion 43a side). The thickness of the light guide plate 43 for illumination increases gradually toward the side portion 43a. By the light incidence structure having the inclined surface 43g, the height of the side portion 43a is made equal to the height of the light emission surface of the light source 41 for illumination while suppressing an increase in the thickness of a portion where the light emitting surface 43s is provided.

In this illuminating device 40, the illumination light emitted from the light source 41 for illumination is incident from the side portion 43a of the light guide plate 43 for illumination onto the inside of the light guide plate 43 for illumination, propagates through the inside of the light guide plate 43 for illumination toward the outer edge 43b of the opposite side, and then is emitted from the light emitting surface 43s which is one surface. Here, the light guide plate 43 for illumination has a light guide structure in which the ratio of light amount of light, which is emitted from the light emitting surface 43s, to internal propagating light, which propagates from the side portion 43a side toward the outer edge 43b on the opposite side, increases monotonously. For example, this light guide structure is realized by gradually increasing the area of a fine uneven refraction surface for light deflection or light scattering, which is formed on the light emitting surface 43s or the back surface 43t of the light guide plate 43 for illumination, the formation density of the printed scattering layer, and the like toward the internal propagation direction. By providing such a light guide structure, the illumination light L4 incident from the side portion 43a is emitted almost uniformly from the light emitting surface 43s.

In the present embodiment, the light guide plate 43 for illumination is disposed so as to overlap the image display region 20R of the liquid crystal panel 209a in plan view at the opposite side of the viewing side of the liquid crystal panel 209a, and functions as a so-called backlight. However, the light guide plate 43 for illumination may be disposed at the viewing side of the liquid crystal panel 209a so as to function as a so-called front light. Moreover, although the light guide plate 43 for illumination is disposed between the light guide plate 13 and the reflecting plate 14 in the present embodiment, the light guide plate 43 for illumination may also be disposed between the optical sheet 16 and the light guide plate 13. In addition, the light guide plate 43 for illumination and the light guide plate 13 may be formed using a common light guide plate. In, addition, in the present embodiment, the optical sheet 16 is commonly used between the position detection lights L2a to L2d and the illumination light L4. However, an optical sheet for exclusive use may also be disposed at the light emission side of the light guide plate 43 for illumination, separately from the optical sheet 16. In this case, a light scattering plate which performs a sufficient light scattering operation is used in many cases in order to make uniform the planar luminance of the illumination light L4 emitted from the light emitting surface 43s in the light guide plate 43 for illumination. However, the position detection is interrupted if the position detection light L2a to L2d emitted from the light emitting surface 13s in the light guide plate 13 for position detection is largely scattered. For this reason, since a light scattering plate is not provided or it is necessary to use a light scattering plate which performs a relatively slight light scattering operation, it is preferable that the light scattering plate is a dedicated component of the light guide plate 43 for illumination. However, optical sheets with a condensing operation, such as a prism sheet (first or second prism sheet 161 or 162) may be commonly used.

Example of mounting into an electronic apparatus

An electronic apparatus to which the display apparatus 100 with a position detection function, which has been described with reference to Figs. 7 to 18, is applied will be described with reference to Figs. 19A to 19C. Figs. 19A to 19C are explanatory views showing an electronic apparatus using the display apparatus with a position detection function according to the embodiment of the invention. Fig. 19A is a view illustrating the configuration of a mobile type personal computer including a display apparatus 100 with a position detection function. A personal computer 2000 includes the display apparatus 100 with a position detection function as a display unit and a main body 2010. A power switch 2001 and a keyboard 2002 are provided in the main body 2010. Fig. 19B is a view illustrating the configuration of a mobile phone including the display apparatus 100 with a position detection function. A mobile phone 3000 includes a plurality of operation buttons 3001, a plurality of scroll buttons 3002, and the display apparatus 100 with a position detection function as a display unit. A screen displayed on the display apparatus 100 with a position detection function is scrolled by operating the scroll buttons 3002. Fig. 19C is a view illustrating the configuration of a personal digital assistant (PDA) to which the display apparatus 100 with a position detection function is applied. A personal digital assistant 4000 includes a plurality of operation buttons 4001, a power switch 4002, and the display apparatus 100 with a position detection function as a display unit. By operating the power switch 4002, various kinds of information, such as an address list or a schedule book, are displayed on the display apparatus 100 with a position detection function.

In addition, examples of an electronic apparatus to which the display apparatus 100 with a position detection function is applied include a digital still camera, a liquid crystal television, a view finder type or monitor direct view type video tape recorder, a car navigation system, a pager, an electronic diary, an electronic calculator, a word processor, a workstation, a video phone, a POS terminal, a bank terminal, and the like, as well as those shown in Figs. 19A to 19C. In addition, the display apparatus 100 with a position detection function described above may be applied as a display unit of each of the various kinds of electronic apparatuses.

**Claims**

1.  An optical position detection apparatus for optically detecting a position of a target object in a detection area, comprising:

    position detection light sources that emit position detection lights irradiated onto the target object;
    a light guide plate having light incident portions that receive the position detection lights therein and emitting the received position detection lights from the light incident portions onto the detection area to form an intensity distribution of a light emission quantity of the position detection lights in the detection area;
    a light detector having light receiving portions arranged toward the detection area to receive the position detection lights that are reflected by the target object; and
    a signal processing portion that detects the position of the target object based on the intensity distribution of the light emission quantity;
    wherein the light guide plate has a plane shape formed in long-side and short-side directions;
    the light incident portions and the position detection light sources are installed on corner portions of the light guide plate; and
    the light incident portions have concavo-convex shapes formed thereon and provided with deflection incident surfaces for deflecting a portion of the position detection lights incident to the optical incident portions in a direction that follows long-side portions of the light guide plate through refraction.

2.  The optical position detection apparatus according to claim 1, wherein one light incident portion and one position detection light source are installed on each corner portion of the light guide plate; and

when the light guide plate is seen in a plan view, the light incident portion may adopt a configuration in which the concavo-convex shape is provided in a portion where the corner portions of the light guide plate are obliquely cut out with respect to the long-side portions and the short-side portions of the light guide plate.

3. The optical position detection apparatus according to claim 2, wherein the concavo-convex shape is formed by a prism-like convex portion toward a peak, on the position detection light source.

4. The optical position detection apparatus according to claim 3, wherein the angle of the peak is 50° to 80°.

5. The optical position detection apparatus according to any one of the preceding claims, wherein the light incident portion includes a first light incident portion protruded on a long-side portion of the light guide plate and a second light incident portion installed on a short-side portion of the light guide plate, which are on the corner portions of the light guide plate;
the position detection light source includes a first light emitting device that emits the position detection light toward the first light incident portion, and a second light emitting device that emits the position detection light toward the second light incident portion which are provided on the corner portions of the light guide plate; and
the concavo-convex shape is formed on the first light incident portion.

6. The optical position detection apparatus according to claim 5, wherein the concavo-convex shape is formed by the prism type convex portion, which is toward the peak, on the first light emitting device.

7. The optical position detection apparatus according to claim 6, wherein the angle of the peak is 50° to 80°.

8. A display apparatus having a position detection function that is provided with an optical position detection apparatus described in any one of claims 1 to 7, comprising an image generation apparatus that forms an image in an area overlapping the light guide plate when seen in a plan view.

9. An optical position detection apparatus for optically detecting a position of a target object, comprising:

   a light guide plate having light incident portions provided on four corner portions of a circumferential portion;
   four position detection light sources that emit position detection lights toward the light incident portions;
   a light detector that receives the position detection lights which are emitted from one surface in a thickness direction of the light guide plate and are reflected by the target object; and
   a signal processing portion that detects the position of the target object based on the result of light received in the light detector;
   wherein the four position detection light sources emit the position detection lights through alternate light-up by changing a combination of one portion of the position detection light sources and the other portion of the position detection light sources the number of which is equal to that of the one portion of the position detection light sources; and
   the optical incident portion is provided with at least one of either a plurality of convex portions or a plurality of concave portions.

10. The optical position detection apparatus according to claim 9, wherein in the light incident portion, a prism type convex portion is formed as the convex portion.

11. The optical position detection apparatus according to claim 9, wherein in the light incident portion, a convex portion in the form of a tetragon is formed as the convex portion.

12. The optical position detection apparatus according to claim 9, wherein in the light incident portion, a convex portion in the form of a tetragon is formed as the convex portion, and a prism type convex portion is formed on at least either of a tip end portion of the corresponding convex portion or a bottom portion of the concave portion that is formed between the corresponding convex portions.

13. The optical position detection apparatus according to claim 9, wherein in the light incident portion, a curved convex portion as the convex portion and a curved concave portion as the concave portion are connected together.

14. The optical position detection apparatus according to claim 9, wherein in the light incident portion, a convex curved surface is formed as the convex portion.

**15.** The optical position detection apparatus according to claim 9, wherein in the light incident portion, a concave curved surface is formed as the concave portion.

**16.** The optical position detection apparatus according to claim 9, wherein in the light incident portion, a concavo-convex having a cross-sectional shape of a Fresnel lens is formed by the convex portion and the concave portion.

**17.** The optical position detection apparatus according to any one of claims 9 to 16, wherein the position detection light is composed of infrared rays.

**18.** The optical position detection apparatus according to any one of claims 9 to 17, wherein the one surface of the light guide plate crosses a direction in which the image is projected.

**19.** A projection display apparatus having a position detection function comprising an optical position detection apparatus as described in any one of claims 9 to 18 and an image projection apparatus that projects an image.

FIG. 1A

FIG. 1B

FIG. 2A

FIG. 2B

FIG. 2C

FIG. 3A

FIG. 3B

12B          13          12D

X

POSITION DETECTION
LIGHT SOURCES
⎧ 12A,12D = LIGHT-UP   ⎫
⎩ 12B,12C = LIGHT-DOWN ⎭
⇕
⎧ 12A,12D = LIGHT-DOWN ⎫
⎩ 12B,12C = LIGHT-UP   ⎭

12C                    12A

FIG. 4A

12B          13          12D

Y

POSITION DETECTION
LIGHT SOURCES
⎧ 12A,12C = LIGHT-UP   ⎫
⎩ 12B,12D = LIGHT-DOWN ⎭
⇕
⎧ 12A,12C = LIGHT-DOWN ⎫
⎩ 12B,12D = LIGHT-UP   ⎭

12C                    12A

FIG. 4B

FIG. 5A

FIG. 5B

FIG. 5C

FIG. 6A

FIG. 6B

FIG. 6C

FIG. 7

FIG. 8A

FIG. 8B

13l

12,12D

130c

13d,13h,13p

130d

13i

13

FIG. 9A

130c0

130c1

13h,13p

13

130c

FIG. 9B

130e1

13l

12,12D

130e

13d,13h,13p

130f

13i

13

FIG. 10

FIG. 11

FIG. 12

FIG. 13

13l    130l

12,12D

130k    13d,13h,13p

13i

13

**FIG.14**

Z
Y    X

100

12B

13b,13f    15x    15(10)

13    10R    13s    10

13j    L2b    15a    13l

L2c    A    B

12C    L2d    12D

L2a    13h,13d

13c,13g    13t    13i    13m

13k

13a,13e    12A

20R

200,208

**FIG.15**

FIG.16

FIG.17

FIG.18

100

2000

FIG.19A

2001

2002

2010

3000

FIG.19B

100

3002

3001

4000

FIG.19C

100

4002

4001

FIG.20

FIG.21A

FIG.21B

FIG.21C

FIG.21D

**EP 2 280 336 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004295644 A

- JP 2004303172 A